(19) Europäisches Patentamt
European Patent Office
Office européen des brevets

(11) **EP 3 570 070 B1**

(12) **FASCICULE DE BREVET EUROPEEN**

(45) Date de publication et mention de la délivrance du brevet:
**10.11.2021 Bulletin 2021/45**

(51) Int Cl.:
***G01S 13/78*** *(2006.01)* ***G01S 13/44*** *(2006.01)*
***G01S 13/76*** *(2006.01)* ***H01Q 25/00*** *(2006.01)*
*G01S 7/40* *(2006.01)*

(21) Numéro de dépôt: **19174996.9**

(22) Date de dépôt: **16.05.2019**

(54) **PROCEDE POUR MESURER EN FONCTIONNEMENT OPERATIONNEL CERTAINES CARACTERISTIQUES DU TRANSPONDEUR DE BORD EN UTILISANT LE RADAR SECONDAIRE**

VERFAHREN ZUM MESSEN VON BESTMMTEN EIGENSCHAFTEN DES BORDTRANSPONDERS IM LAUFENDEN BETRIEB MITHILFE DES SEKUNDÄRRADARS

METHOD FOR MEASURING THE OPERATIONAL FUNCTIONING OF CERTAIN CHARACTERISTICS OF AN AIRBORNE TRANSPONDER USING SECONDARY RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2018 FR 1800479**

(43) Date de publication de la demande:
**20.11.2019 Bulletin 2019/47**

(73) Titulaire: **Thales**
**92400 Courbevoie (FR)**

(72) Inventeur: **BILLAUD, Philippe**
**91470 LIMOURS (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 431 762** **WO-A1-2016/163925**
**US-A- 5 157 615** **US-B2- 7 598 905**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 570 070 B1

## Description

### DOMAINE DE L'INVENTION

L'invention se rapporte au domaine général du Contrôle du Trafic Aérien (ATC selon l'acronyme de la dénomination anglo-saxonne "Air Traffic Control") pour lequel la performance du radar de contrôle au sol, comme celle des transpondeurs à bord des aéronefs sont fondamentales afin de garantir le haut niveau de sécurité requis.

Elle se rapporte plus particulièrement au contrôle des performances d'un transpondeur de bord fonctionnant en Mode S (Mode Sélectif), au moyen du radar de contrôle avec lequel il dialogue.

### *CONTEXTE DE L'INVENTION-ART ANTERIEUR*

De nos jours, le control du trafic aérien est principalement basé sur le dialogue en mode S entre un ou plusieurs radars associés à un centre de contrôle au sol et les transpondeurs Mode S des aéronefs en vol dont il assure la surveillance et la sécurité. La fiabilité de détection et de décodage des systèmes de contrôle du trafic aérien fonctionnant en mode S est mondialement reconnue.

Cependant, les performances des liaisons en Mode S sont en pratique directement liées aux caractéristiques de performance des transpondeurs placés à bord des aéronefs, qui dialoguent en mode S avec le radar de contrôle de trafic.

En effet un radar de contrôle de trafic de type radar secondaire, contrairement à un radar primaire de surveillance qui n'attend aucune coopération des objets évoluant dans l'espace dont il a la surveillance, se distingue par le fait qu'il établit, avec chaque aéronef dont il assure la surveillance, un dialogue basé, en Mode S, sur :

- une interrogation sélective, sur une fréquence de 1030MHz, destinée spécifiquement à l'aéronef considéré, via l'adresse Mode S de ce dernier,
- la réponse du transpondeur de l'aéronef considéré à cette interrogation, sur une fréquence de 1090MHz, encodée avec son adresse Mode S.

La bonne qualité de ce dialogue met en jeu, au niveau du transpondeur, trois caractéristiques principales :

- la puissance de son émetteur qui est un second facteur déterminant de la distance au-delà de laquelle l'aéronef n'est plus sous le contrôle du radar considéré;
- sa capacité à traiter de nombreuses réponses Mode S (charge supportée) : taux de réponse moyen local, moyen global et maximal;
- la Sensibilité de son récepteur, ainsi que la capacité de décodage de l'interrogation Mode S reçue, sensibilité qui est un premier facteur déterminant de la distance au-delà de laquelle l'aéronef n'est plus sous le contrôle du radar considéré;

Il est à noter par ailleurs, qu'alors qu'un radar secondaire émet ses interrogations Mode S de manière directionnelle vers tel ou tel aéronef évoluant dans l'espace dont il a le contrôle, le transpondeur d'un aéronef émet et reçoit de manière omnidirectionnelle et peut donc dialoguer avec tous les radars qui l'environnent. Ce dialogue multiple peut engendrer une charge excessive au niveau du transpondeur.

Il est à noter également qu'un transpondeur émet également des messages non sollicités (Asynchrones), autres que les réponses aux interrogations dont il fait l'objet et qui mettent à contribution sa capacité à formuler et émettre les nombreuses réponses en Mode S aux interrogations en Mode S auxquelles il est soumis.

Bien que la capacité de dialogue et les performances d'un transpondeur soient physiquement limitées, elles doivent cependant respecter les minima définis par le règlement de l'Organisation de l'Aviation Civile Internationale (OACI ou ICAO selon la dénomination anglo-saxonne), minima qui permettent de garantir un niveau minimal donné d'intégrité des liaisons radar transpondeur.

A ce titre un transpondeur Mode S doit en particulier présenter:

- une puissance d'émission crête rayonnée , se situant dans un intervalle de puissance donné par L'OACI;
- un taux minimal de réponse en Mode S, caractéristique particulièrement dimensionnante;
- une sensibilité minimale et une gamme dynamique minimale;
- des diagrammes d'antenne, à l'émission et à la réception, présentant des gabarits donnés, participant directement au rayonnement.

A l'heure actuelle il n'est pas possible de contrôler de manière simple les caractéristiques de fonctionnement d'un transpondeur, dès lors qu'il est installé à bord d'un aéronef.

En effet les méthodes de contrôle utilisées nécessitent que le transpondeur soit déposé et mis sur banc de test, ce qui a pour conséquence de maintenir l'aéronef au sol pendant les phases de contrôle et d'induire des coûts d'immobilisation élevés.

Par suite, dans le contexte technique actuel, les mesures permettant de connaitre les caractéristiques fondamentales d'un transpondeur, à savoir :

- la mesure de sa Puissance en émission à 1090MHz qui permet de déterminer son aptitude à transmettre des réponses aux interrogations radar,
- la mesure de son Taux de génération de réponse suite à interrogation (taux moyen local, global et maximal);
- la mesure de sa Sensibilité en réception 1030MHz qui permet de déterminer son aptitude à recevoir les interrogations émises par un radar de contrôle,

ne peuvent être réalisées que lors des périodes de maintenance de l'aéronef sur lequel il est monté, maintenance qui nécessite l'immobilisation de l'aéronef.

Aucun moyen simple et économiquement abordable n'est actuellement proposé qui permette de détecter, entre deux périodes de maintenance, un dérèglement ou une baisse de performance d'un transpondeur.

Cependant, pour des raisons évidentes de Sécurité, il est nécessaire de détecter au plus tôt les dégradations des performances d'un transpondeur, en particulier si ces dégradations sont telles que le transpondeur ne répond plus à certaines exigences édictées par les autorités de l'OACI, notamment celles mentionnées dans l'annexe 10 - volume IV de la convention relative à l'aviation civile internationale. En effet de telles dégradations des performances peuvent occasionner une perte de contact entre le radar et le transpondeur notamment en zone de couverture lointaine du radar.

Un document EP 2 431 762 A1 divulgue un procédé pour allonger le temps d'éclairement de cibles par un radar secondaire.

Dans la suite du texte, pour simplifier la rédaction, on dénommera sous l'appellation de "puissance du transpondeur" la puissance rayonnée $P_{Tr}$ par le transpondeur (en dBm) vue par le radar, à une fréquence de 1090 MHz ainsi que sous l'appellation de "sensibilité du transpondeur" la sensibilité $S_{Tr}$ du transpondeur (à 1030 MHz) mesurée au niveau de l'antenne de l'aéronef, en y incluant ainsi les pertes (en dB) dues au câblage aéronef entre le transpondeur et son antenne et le gain maximal de l'antenne de l'aéronef associée au transpondeur;

***PRESENTATION DE L'IVENTION***

Un but de l'invention est de proposer une solution permettant de contrôler les performances majeures d'un transpondeur, un transpondeur fonctionnant en Mode S plus particulièrement, alors même que ce transpondeur est en service à bord d'un aéronef.

Un autre but de l'invention est de proposer une solution permettant d'utiliser le radar secondaire interrogateur pour effectuer le contrôle d'un transpondeur fonctionnant en Mode S.

A cet effet l'invention a pour objet un procédé pour réaliser le test de bon fonctionnement, en phase opérationnelle, d'un transpondeur radar secondaire d'un aéronef évoluant dans une zone couverte par un radar secondaire de surveillance du trafic aérien, caractérisé en ce qu'il comporte:

- une première étape qui met en œuvre:
  - une opération de mesure de la puissance émise par le transpondeur, réalisée à partir de la mesure de la puissance reçue du transpondeur en réponse à chaque interrogation émise par le radar;
  - une opération de mesure du taux de réponse moyen du transpondeur aux interrogations émises par le radar, réalisée en comptabilisant le nombre d'interrogations pour lesquelles le radar a reçu une réponse en provenance du transpondeur;

  la première étape étant réalisée alors que les paramètres de fonctionnement du radar ne sont pas modifiés par rapport aux paramètres de fonctionnement opérationnel;
- une deuxième étape qui met en œuvre une opération de mesure de la sensibilité du transpondeur, réalisée en émettant des interrogations supplémentaires avec des niveaux de puissance d'émission croissants ou décroissants au cours du temps, et en déterminant le niveau de puissance émise lors de l'émission de la première interrogation en deçà duquel le transpondeur ne transmet pas de réponse;
la deuxième étape étant réalisée en modifiant les paramètres de fonctionnement du radar de façon à ce que les interrogations supplémentaires requises pour la mesure puissent être réalisées, pendant l'intervalle de temps suivant la dernière interrogation opérationnelle durant lequel l'aéronef reste localisé dans le lobe principal voie Somme de l'antenne du radar, avec une puissance émise dans la direction du transpondeur encadrant le seuil de sensibilité du transpondeur;

- une troisième étape qui met en oeuvre une opération de mesure du taux maximal de réponses que peut soutenir le transpondeur pendant un intervalle de temps court, de durée donnée, l'opération étant réalisée en émettant une pluralité d'interrogations supplémentaires et en comptabilisant les interrogations pour lesquelles le transpondeur a transmis des réponses;

la troisième étape étant réalisée en modifiant les paramètres de fonctionnement du radar de façon à rendre possible l'émission, pendant l'intervalle de temps suivant la dernière interrogation opérationnelle pendant lequel l'aéronef reste localisé dans le lobe principal voie Somme de l'antenne du radar, d'un nombre d'interrogations successives suffisant pour occasionner une absence de réponse du transpondeur.

Selon diverses dispositions pouvant être considérées chacune séparément ou bien considérées en combinaison, le procédé selon l'invention peut présenter les caractéristiques fonctionnelles suivantes.

Selon une première caractéristique, l'opération de mesure de puissance de la première étape est réalisée à partir des interrogations opérationnelles ou d'interrogations supplémentaires émises vers le transpondeur.

Selon une autre caractéristique, l'opération de mesure du taux de réponse moyen local du transpondeur de la première étape est réalisée en effectuant pour chaque tour d'antenne, le décompte du ratio entre le nombre d'interrogations envoyées au transpondeur et le nombre de réponses obtenues dans le lobe effectif EBW, et en calculant, de manière glissante, la valeur moyenne de ce ratio sur un nombre donné de tours d'antenne ou de rendez-vous d'antenne.

Selon une autre caractéristique, dans une configuration de fonctionnement multi-radars, l'exécution de l'opération de mesure du taux de réponse moyen local du transpondeur de la première étape fait appel à une opération complémentaire permettant de déterminer si, dans le cas d'une absence de réponse aux interrogations émises par le radar durant un intervalle de temps donné, l'aéronef interrogé est occupé par la transmission d'une réponse à destination d'un autre radar appartenant également à la structure multi-radars considérée.

Les absences de réponse considérées ne sont, dans ce cas, pas comptabilisées comme telles et le taux de réponse moyen global est établi sur la base de la présence ou non de réponses à des interrogations émises par d'autre radars.

Selon une autre caractéristique, l'opération de mesure de sensibilité de la deuxième étape est réalisée en diminuant progressivement la puissance transmise au transpondeur. Des interrogations supplémentaires sont émises par le radar dès que la puissance transmise au transpondeur passe en dessous d'une valeur de puissance donnée supérieure au seuil théorique de sensibilité et dans un intervalle de puissance incluant ce seuil. Les interrogations supplémentaires successives sont émises, alors que la puissance transmise au transpondeur diminue, jusqu'à ce qu'aucune réponse ne soit plus transmise au radar. La valeur de la moyenne, entre la puissance de signal transmise au transpondeur pour la dernière interrogation à laquelle le transpondeur a répondu et celle pour laquelle le transpondeur n'a pas répondu, détermine le niveau de sensibilité mesuré du transpondeur.

Selon une autre caractéristique, la puissance d'émission de l'émetteur du radar étant réduite d'un nombre donné de décibels, des interrogations supplémentaires sont émises par le radar avec des niveaux de puissance dégressifs dès que, du fait du dépointage du lobe principal d'émission voie Somme par rapport à la direction de l'aéronef, la puissance transmise au transpondeur évolue dans un intervalle de puissance incluant le seuil théorique de sensibilité du transpondeur.

Selon une autre caractéristique, si dès la première interrogation supplémentaire le transpondeur ne fournit pas de réponse ou si, lors de la dernière interrogation supplémentaire, le transpondeur transmet toujours une réponse, l'étape de mesure de sensibilité est ré-exécutée au tour d'antenne suivant avec une puissance émise par l'émetteur respectivement supérieure ou inférieure à la puissance émise pour la mesure précédente.

Selon une autre caractéristique, l'émetteur étant configuré pour émettre un signal vers le transpondeur via les lobes d'émission voie Différence avec une puissance donnée, des interrogations supplémentaires sont émises par le radar dès que, du fait du dépointage des lobes d'émission voie Différence par rapport à la direction de l'aéronef, la puissance transmise au transpondeur passe au-dessus d'une valeur de puissance donnée inférieure au seuil théorique de sensibilité et croît dans un intervalle de puissance incluant ce seuil théorique. Les interrogations supplémentaires successives sont émises, alors que la puissance transmise au transpondeur augmente, jusqu'à ce qu'une réponse soit transmise au radar. La valeur de la moyenne, entre la puissance de signal transmise au transpondeur pour la première interrogation à laquelle le transpondeur a répondu et la dernière pour laquelle le transpondeur n'a pas répondu, est considérée comme correspondant au niveau de sensibilité mesuré du transpondeur.

Selon une autre caractéristique, si, alors que la valeur de la puissance transmise au transpondeur est supérieure à la limite supérieure de l'intervalle de puissance considéré le transpondeur ne transmet toujours aucune réponse, ou si le transpondeur fournit une réponse dès la première interrogation, l'étape de mesure de sensibilité est ré-exécutée au tour d'antenne suivant avec une puissance émise par l'émetteur respectivement supérieure ou inférieure à la puissance émise pour la mesure.

Selon une autre caractéristique, l'opération de mesure du taux de réponse maximal d'un transpondeur est réalisée en émettant vers le transpondeur considéré, dès que la dernière interrogation sélective opérationnelle a été exécutée avec succès, des interrogations supplémentaires successives, séparées entre elles par un intervalle de temps cohérent de l'unité de temps du taux de réponse maximal à mesurer, et en comptabilisant les réponses transmises par le transpondeur jusqu'à la première interrogation restée sans réponse, ainsi qu'en déterminant le temps de réponse maximal, de façon à établir une mesure du taux maximal pour une unité de temps donné, ledit taux étant comparé au taux minimal imposé par la règlementation applicable pour déterminer l'état du transpondeur.

Selon une autre caractéristique, les différentes étapes sont exécutées plusieurs fois au cours du vol de l'aéronef, lors de chaque tour d'antenne, les résultats obtenus pour chaque mesure étant utilisés pour calculer une moyenne de la valeur de la caractéristique mesurée pondérée du nombre d'échantillons de chaque mesure et des conditions d'obtention de ladite mesure.

Selon une autre caractéristique, les différentes étapes sont exécutées pour un même aéronef par plusieurs radars, les mesures obtenues par chacun des radars étant utilisées pour calculer une moyenne de la valeur de la caractéristique mesurée pondérée du nombre d'échantillons de chaque mesure et des conditions d'obtention de ladite mesure.

***DESCRIPTION DES FIGURES***

Les caractéristiques et avantages de l'invention seront mieux appréciés grâce à la description qui suit, description qui s'appuie sur les figures annexées qui présentent:

la figure1, un synoptique du procédé selon l'invention;

la figure 2, un schéma de principe du fonctionnement d'un radar secondaire apte à mettre en oeuvre le procédé selon l'invention;

la figure 3, une illustration présentant les diagrammes de rayonnement en azimut, en émission et en réception, des différentes voies d'antenne du radar secondaire illustré par la figure 2;

la figure 4, une illustration présentant les diagrammes de rayonnement en élévation, en émission et en réception, de la voie Somme du radar secondaire illustré par la figure 2;

la figure 5, un diagramme illustrant le principe de séquencement idéal des interrogations opérationnelles en mode S réalisées, pour un aéronef, par un radar secondaire;

la figure 6, un diagramme illustrant le principe de séquencement des interrogations opérationnelles en mode S dans le cadre des étapes de mesure de puissance et des taux de réponse moyens (taux local et taux global), du procédé selon l'invention;

la figure 7, un diagramme illustrant le principe de séquencement des interrogations opérationnelles en mode S et des interrogations supplémentaires dans le cadre de l'étape de mesure de sensibilité du transpondeur, dans une première forme de mise en oeuvre du procédé selon l'invention;

la figure 8 un diagramme illustrant le principe de séquencement des interrogations opérationnelles en mode S et des interrogations supplémentaires dans le cadre de l'étape de mesure de sensibilité du procédé selon l'invention, dans une seconde forme de mise en œuvre;

la figure 9, un diagramme illustrant le principe de séquencement des interrogations opérationnelles en mode S et des interrogations supplémentaires dans le cadre de l'étape de mesure du taux de réponse maximal du procédé selon l'invention;

la figure 10, un schéma de principe mettant en évidence les modifications fonctionnelles permettant à un radar secondaire de mettre en oeuvre le procédé selon l'invention.

Il est à noter que, sur les figures annexées, un même élément fonctionnel ou structurel porte de préférence un même symbole repère, nombre ou lettre.

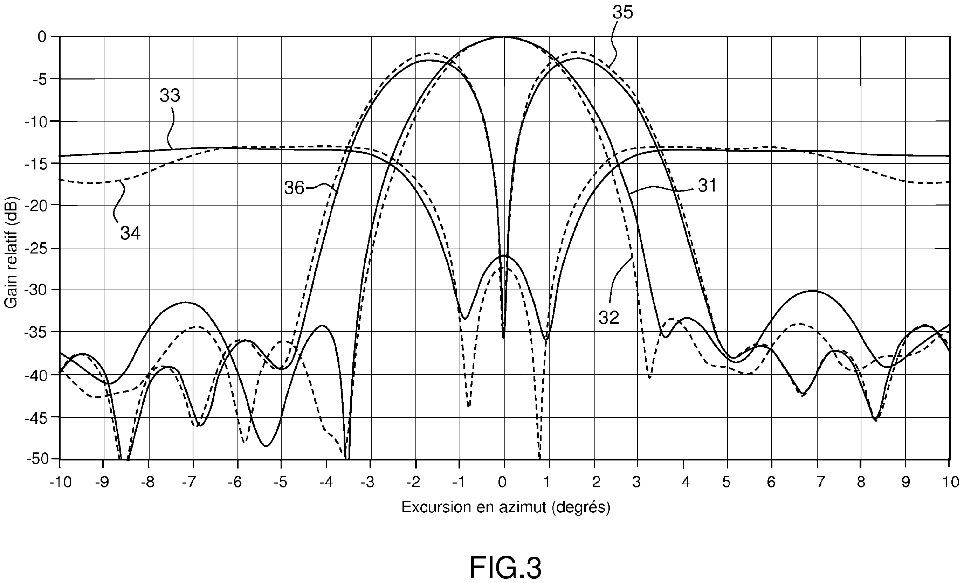

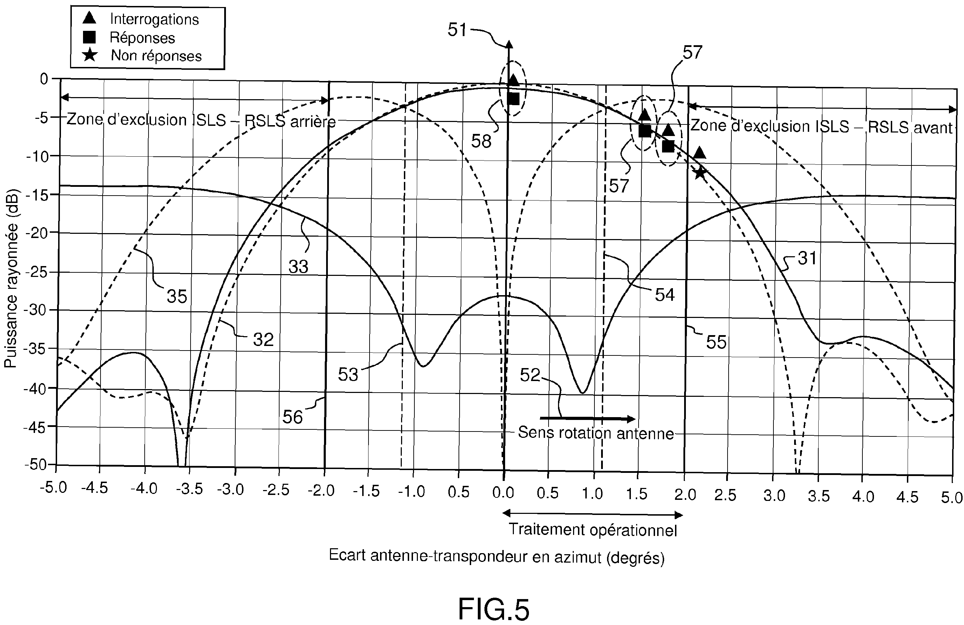

Il est à noter également que, dans les figures 5 à 9, les tracés représentent la puissance rayonnée vers, ou par, l'aéronef considéré en évaluation des performances de son transpondeur, celle-ci prend en compte le diagramme d'antenne en azimut de la figure 3 pondéré pour l'émission de la puissance de l'interrogation.

On y présente, en exemple, de manière scindée, la phase de traitement opérationnel, requise pour détecter la cible et la positionner, et la phase de test de bon fonctionnement requise pour évaluer les performances du transpondeur. Les traits pleins représentent la puissance rayonnée au cours des 2 phases lors des interrogations du radar.

## *DESCRIPTION DETAILLEE*

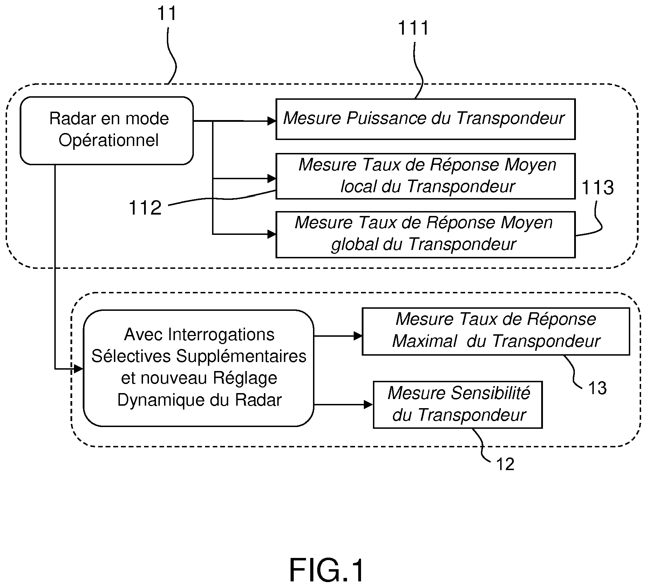

Le concept général du procédé de test en phase opérationnelle selon l'invention (i.e. la solution apportée par l'invention au problème posé) comporte, comme l'illustre la figure 1, trois étapes distinctes :

- une première étape 11 durant laquelle on utilise les réponses du transpondeur aux interrogations en Mode S transmises en mode opérationnel par le radar secondaire pour réaliser :
- la mesure 111 de la puissance du transpondeur,
- la mesure 112 du taux de réponse moyen local aux interrogations en mode S émises par le radar à son intention,

et, de manière complémentaire:

- la mesure 113 du taux de réponse moyen global aux interrogations en mode S d'un transpondeur vis-à-vis de tous les radars le gérant.

Il est à noter que l'exécution de la mesure 113 n'est évidemment nécessaire que si différents radars gèrent simultanément le transpondeur et qu'elle n'est possible que si les différents radars gérant le transpondeur considéré coopèrent au sein d'un système de contrôle global, comme cela est exposé dans la suite du texte.

Durant cette étape le procédé selon l'invention exploite seulement les signaux et données opérationnelles échangés dans le cadre d'un fonctionnement en mode S;

- une deuxième étape 12 durant laquelle on effectue la mesure de la sensibilité du transpondeur, au moyen d'interrogations supplémentaires en Mode S transmises par le radar en plus de celles transmises en phase de fonctionnement opérationnel.

Une troisième étape 13 durant laquelle on utilise les réponses du transpondeur à des interrogations sélectives additionnelles émises par le radar spécifiquement pour le transpondeur considéré, pour réaliser le test de son taux de réponse maximal.

Selon l'invention, la première étape 11 du procédé de test peut être implémentée durant la phase d'échanges opérationnels entre le radar et le transpondeur; tandis que la deuxième étape 12 et la troisième étape 13 sont réalisées hors des phases d'échanges opérationnels entre le radar et le transpondeur et nécessitent une modification en temps réel du fonctionnement du radar.

Selon l'invention également, c'est l'exécution de l'ensemble des mesures constituant les différentes étapes du procédé qui permet de déterminer l'état de bon fonctionnement du transpondeur considéré.

Par suite un transpondeur est considéré comme étant en bon état de fonctionnement, si les mesures constituant les différentes étapes du procédé selon l'invention sont conformes aux spécifications de l'organisation de l'aviation civile internationale (OACI) relative à chacune des caractéristiques fonctionnelles mesurées (cf. annexe 10 - volume IV de la convention relative à l'aviation civile internationale).

Cependant, les différentes étapes 11, 12 et 13 du procédé sont indépendantes de sorte qu'elles peuvent être réalisées selon un ordre quelconque qui dépend notamment de la possibilité, à l'instant considéré, d'exécuter telle ou telle étape du procédé, possibilité qui suppose que certaines conditions soient remplies. L'ordre d'exécution des étapes du procédé selon l'invention est notamment conditionné par les impératifs de fonctionnement opérationnel du radar.

Ainsi, l'étape 11 peut être effectuée en permanence lors du fonctionnement opérationnel quand la cible (i.e. le transpondeur) est dans des zones où l'on sait :

- pour la mesure de puissance (opération 111), que la propagation des ondes s'effectue sans perturbation afin que les mesures soient le moins possible entachées d'erreurs,
- pour une mesure fiable du taux de réponse moyen du transpondeur:

- qu'aucun autre radar n'est susceptible d'interroger le transpondeur, auquel cas l'opération 112 rend un résultat fiable concernant le taux de réponse moyen; ou
- que tous les radars susceptibles d'interroger le transpondeur soient connectés à un centre de contrôle et transmettent leurs données à ce dernier, auquel cas l'exécution de l'opération complémentaire 113 rend un résultat fiable concernant le taux de réponse moyen.

De même, les étapes 12 et 13 doivent être réalisées quand l'aéronef porteur du transpondeur interrogé évolue dans des zones où les interrogations mode S supplémentaires ne sont pas susceptibles de perturber le fonctionnement des autres radars qui effectuent des transactions avec l'aéronef considéré, et où le transpondeur est peu interrogé par d'autres radars afin que les mesures soient fiables.

Par ailleurs, chaque étape peut être répétée plusieurs fois pour un même transpondeur, le nombre de fois où une mesure est effectuée étant notamment lié à la précision de mesure attendue. On peut ainsi, par exemple, considérer, en première estimation, qu'une dizaine de mesures par transpondeur effectuées dans les conditions décrites précédemment, ce qui correspond à un temps d'exécution de l'ordre de 1 mn par radar, permettent un premier niveau d'estimation des performances.

Il est à noter que toutes les mesures effectuées sur un transpondeur peuvent avantageusement être mémorisées et corrélées sur des durées couvrant plusieurs vols de l'aéronef à bord duquel le transpondeur est placé, pour tracer l'évolution des mesures au cours du temps afin de détecter une dégradation progressive du transpondeur.

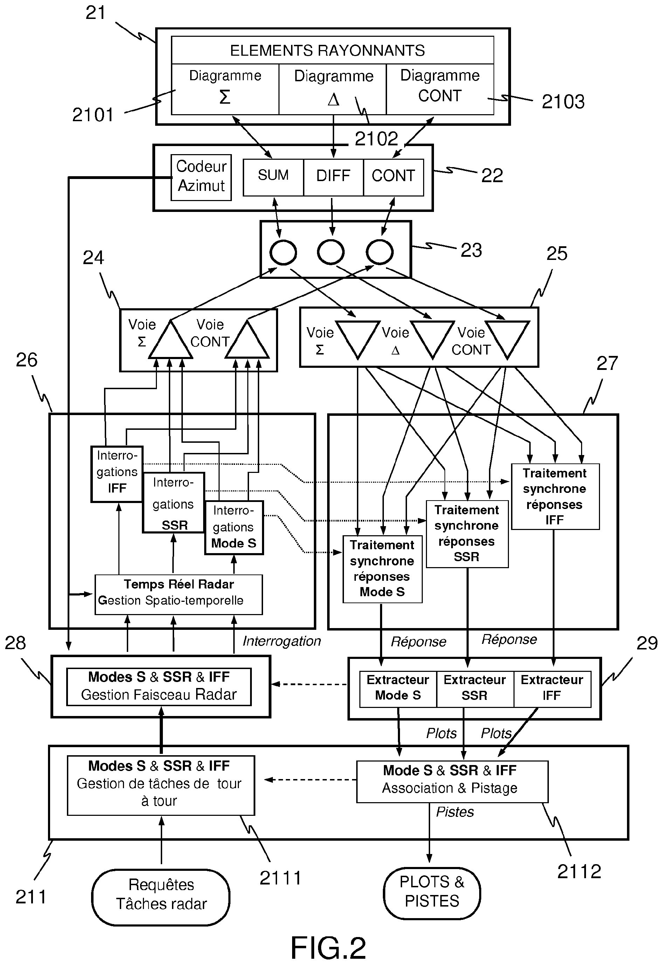

Dans la suite du texte on décrit de manière détaillée chacune des trois étapes. Pour ce faire et de façon à rendre plus clair le principe de fonctionnement du procédé selon l'invention, on considère le cas d'un radar secondaire type dont la structure et le principe de fonctionnement sont décrits à partir des figures 2 à 5.

La figure 2, présente de manière schématique les principaux éléments constitutifs d'un Radar secondaire, radar IFF ("Identification Friend or Foe", radar SSR ("Secondary Surveillance Radar") ou radar Mode S, pris comme exemple, dans lequel le procédé selon l'invention peut être mis en œuvre. Le radar présenté ici, à titre d'exemple, est un radar classique comportant une antenne 21 configurée pour présenter trois diagrammes de rayonnement correspondant aux voies classiques d'un radar secondaire :

- une première voie montante et descendante 2101, dite voie "Somme" ou voie "SUM" ou voie Σ qui correspond au lobe principal de l'antenne;
- une voie descendante 2102, dite voie "Différence" ou voie "DIFF" ou voie Δ, généralement descendante (on considère ici seulement la voie azimut);
- une deuxième voie montante et descendante 2103, dite voie de Contrôle ou voie CONT ou voie « Ω » ou voie SLS (Side Lobe Suppression selon la dénomination anglo-saxonne) qui permet de déterminer, de manière connue, les signaux reçus par les lobes secondaires du diagramme voie Somme de l'antenne en émission ISLS (ou « Interrogation Side Lobe Suppression » selon la dénomination anglo-saxonne) ou en réception RSLS (ou « Réception Side Lobe Suppression » selon la dénomination anglo-saxonne).

Il est à noter cependant que le principe de test mis en oeuvre par le procédé selon l'invention peut être implémenté dans d'autres types de radars. Selon les missions allouées au radar considéré et donc selon les performances attendues du radar, l'antenne équipant le radar considéré peut être caractérisée par plusieurs éléments :

1) le nombre de diagrammes présentés:

- 4 diagrammes : Somme (voie Σ), Différence (voie Δ), Contrôle avant (voie CONT_Front) et Contrôle arrière (voie CONT_Back) ;
- 3 diagrammes : Somme (voie Σ), Différence (voie Δ) et Contrôle ( les voies CONT_Front et CONT_Back étant regroupées au niveau de l'antenne) ;
- 2 diagrammes : Somme (voie Σ), Différence et Contrôle (les voies Δ, CONT_Front & CONT_Back étant regroupées au niveau de l'antenne).

2) ses dimensions en largeur : une antenne de grande largeur permet, de manière connue, de former un faisceau principal (lobe principal voie Somme) fin qui apporte un gain élevé ainsi qu'une forte sélectivité et une précision accrue en azimut ;

3) ses dimensions en hauteur :

- une antenne de grande hauteur, du type à grande ouverture verticale ("Large Vertical Aperture" ou LVA selon la dénomination anglo-saxonne) présente un gain significatif et apporte une protection contre les réflexions sol (utile principalement en ATC) ;

- une antenne de petite hauteur, de type "poutre" apporte une mobilité.

De manière connue, pour une antenne ATC, les diagrammes des voies Somme et Différence sont classiquement fins avec des lobes secondaires à 3dB entre 2,4° à 10°, alors que les diagrammes des voies Contrôle (CONT_Front et CONT_Back) cherchent à couvrir pratiquement 180° chacun.

Il est à noter également que le principe de test mis en oeuvre par le procédé selon l'invention peut être implémenté dans différents types de radars comportant aussi bien des antennes à diagrammes fixes telles que les antennes tournantes, dites "à balayage mécanique" que par des antennes à diagrammes évolutifs telles que des antennes à balayage électronique fixes ou tournantes, telles que les antennes actives à balayage électronique ("Active Electronically Scanned Array" ou AESA selon la dénomination anglo-saxonne).

La suite du texte, illustré par les figures 2 à 10, décrit le procédé selon l'invention en s'appuyant sur la structure d'un radar secondaire ATC, pris comme exemple, équipé d'une antenne à trois diagrammes, Somme Différence et Contrôle.

Dans le cadre d'un radar secondaire, l'antenne 21 est configurée de façon à couvrir une bande de fréquences recouvrant la fréquence des signaux d'interrogation Mode S émis par le radar (1030 MHz), ainsi que la fréquence des signaux transmis par le transpondeur (1090 MHz), des réponses aux interrogations du radar notamment.

Comme l'illustre la figure 2, un radar secondaire comporte, de manière connue également, différents éléments fonctionnels dont le rôle est sommairement rappelé ci-après.

Le joint tournant 22, assure le couplage en radiofréquence (couplage RF), entre la partie tournante et la partie fixe du Radar, des signaux à 1030MHz et à 1090MHz correspondant aux différents diagrammes d'antenne. Il assure également la diffusion de la position en azimut de l'axe du lobe principal du diagramme voie Somme de l'antenne;

Le duplexeur 23 assure le couplage de l'émetteur 24 et du récepteur 25 du radar aux différentes voies de l'antenne;

L'émetteur 24 produit et délivre sur la voie Somme et la voie CONT les signaux RF à 1030MHz, correspondant aux interrogations émises par le radar. Les émissions sur la voie CONT, permettent, de manière connue, d'identifier et de bloquer (i.e. d'empêcher leur prise en compte par le radar) les réponses provenant de transpondeurs reçues par les lobes secondaires de la voie Somme de l'antenne 21 (interrogations ISLS).

Le fonctionnement de l'émetteur est similaire pour les différents protocoles de communication, IFF, SSR et Mode S, utilisé par le radar secondaire.

Le récepteur 25 assure la réception des signaux RF à 1090MHz correspondant aux réponses des transpondeurs, reçus sur les différentes voies Somme 2101, Différence 2102 et Contrôle 2103.

Le fonctionnement du récepteur est similaire pour les différents protocoles IFF, SSR et Mode S.

Le module 26 de gestion temps réel du radar réalise la Gestion Spatio-temporel (Space Time Management ou STM selon la dénomination anglo-saxonne) du radar, autrement dit la gestion temps réel des périodes d'interrogations et d'écoutes associées, pour les différents protocoles IFF, SSR et Mode S.

A cet effet il conduit en temps réel les interrogations émises, sous forme de signaux RF, par l'émetteur 24 sur les voies Somme 2101 et Contrôle 2103.

Le module de traitement du signal 27 (Signal Processing ou SP selon la dénomination anglo-saxonne) assure la détection des réponses reçues par le radar durant les périodes d'écoutes associées aux interrogations, pour les différents protocoles IFF, SSR et Mode S, selon leurs définitions par l'unité de Gestion Spatio-temporelle du radar.

Il assure, à cet effet, la détection et le décodage des réponses Synchrones transmises par les transpondeurs en exploitant les signaux RF reçus par les différentes voies de réception 2101, 2102 et 2103 de l'antenne :

- les signaux RF reçus par la voie Somme, pour détecter les réponses reçues par le lobe principal du diagramme d'antenne;
- les signaux RF reçus par la voie Différence, notamment pour localiser finement en azimut les réponses reçues par le lobe principal du diagramme d'antenne;
- les signaux RF reçus par la voie Contrôle, pour rejeter les réponses reçues par les lobes secondaires du diagramme d'antenne. Les réceptions sur la voie CONT, permettent, de manière connue, d'identifier et de bloquer (i.e. d'empêcher leur prise en compte par le radar) les réponses provenant de transpondeurs reçues par les lobes secondaires de la voie Somme de l'antenne 21 (fonction RSLS).

Le module 28 de gestion et de séquencement assure la préparation des transactions (interrogations & réponses) à effectuer, en fonction de l'azimut du lobe principal du diagramme voie Somme de l'antenne, pour les différents protocoles IFF, SSR et Mode S. A ce titre il assure:

- la prise en compte des cibles présentes dans le lobe principal d'antenne ("Radar Beam Scheduling" selon la dénomination anglo-saxonne) pour l'azimut considéré;
- le placement des interrogations et réponses Mode S dans la future période de fonctionnement en mode "Roll call" en fonction de l'état des transactions venant d'être effectuées. On rappelle ici que, de manière connue, une période de fonctionnement en mode "Roll call" consiste en un intervalle de temps durant lequel, classiquement, on réalise le dialogue (interrogation & réponse) sélectivement avec chaque aéronef dont le transpondeur fonctionne en mode S, présent dans le lobe principal du diagramme voie Somme de l'antenne.

Le module extracteur 29 assure, de manière classique, la fonction de constitution de plots, dénommée usuellement extraction, pour chacun des différents protocoles IFF, SSR et Mode S, à partir des réponses synchrones correspondant aux messages véhiculés par les signaux RF reçus par les différentes voies de réception 2101-2102-2103 du radar.

Le module de Gestion multi tours 2111 (Task Scan Management selon la dénomination anglo-saxonne) assure principalement la gestion des tâches Mode S à effectuer de tour à tour pour les transpondeurs appartenant à des aéronefs évoluant dans la Zone de surveillance du radar.

A ce titre il comporte un module assurant la prédiction des positions des aéronefs pour le rendez-vous d'antenne à venir et la préparation des tâches à effectuer selon les demandes externes et l'état des transactions effectuées précédemment.

Le module d'association des plots et de pistage des cibles 2112 (Association & Pistage) assure, dans la zone de surveillance du radar, le pistage des cibles par association des plots obtenus dans un tour avec la piste existante issue des plots antérieurs de la même cible, afin d'améliorer les performances (élimination des faux plots, control de données décodées, ...) de suivi des aéronefs et surtout de prédire la position future de ces derniers lors du prochain rendez-vous d'antenne.

Par rendez-vous d'antenne, on entend le passage du lobe principal voie Somme de l'antenne sur l'aéronef considéré. Dans le cas d'une antenne à diagramme fixe et à balayage mécanique, il se produit une fois par tour d'antenne. En revanche dans le cas d'une antenne à balayage électronique il se produit au rythme du pointage du lobe principal de l'antenne sur la position de l'aéronef. Dans la suite du texte, sauf spécification contraire, les notions de tour d'antenne et de rendez-vous d'antenne sont regroupées sous le vocable "tour d'antenne".

Comme l'illustre la figure 2, le fonctionnement d'un radar secondaire en Mode S (mais aussi en modes SSR et IFF) est un fonctionnement synchrone qui procède par la génération d'interrogations successives et par le traitement synchrone des réponses correspondantes, la synchronisation étant matérialisée sur la figure par les flèches reliant respectivement les modules 26 et 28 aux modules 27 et 29 ainsi que par la flèche reliant les modules 2111 et 2112.

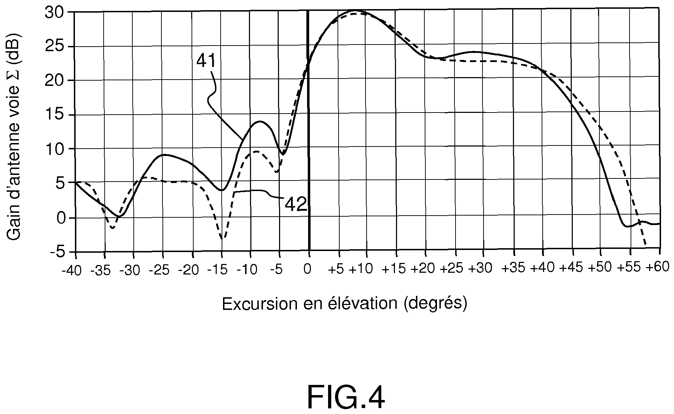

Les figures 3 et 4, présentent des diagrammes d'antenne types correspondant aux diagrammes de rayonnement d'une antenne 21 pouvant notamment équiper un radar secondaire ATC.

La figure 3 présente le gain relatif (en dB) de chacune des voies de l'antenne en fonction de l'excursion en azimut (en degré) autour de l'axe central du lobe principale 31 de la voie Somme de l'antenne (voie $\Sigma$) pour la fréquence d'émission (1030 MHz), le gain relatif étant considéré en prenant le gain maximum du lobe principal comme référence (0dB). La courbe 32 représente le diagramme d'antenne du lobe principal de la voie Somme de l'antenne (voie $\Sigma$) pour la fréquence de réception (1090 MHz), les courbes 33 et 34 représentent les diagrammes d'antenne de la voie Contrôle (voie CONT), pour la fréquence d'émission (1030 MHz) et pour la fréquence de réception (1090 MHz) respectivement, tandis que la courbe 35 représente le diagramme d'antenne de la voie Différence (voie $\Delta$) pour la fréquence de réception (1090 MHz).

La figure 4 quant à elle, présente les courbes 41 et 42 de variation du gain en valeur absolue (en dB), en fonction de l'excursion en élévation (en degré) du lobe principal de la voie Somme (voie $\Sigma$) de l'antenne, pour la fréquence d'émission (1030 MHz) et la fréquence de réception (1090 MHz) respectivement.

Comme l'illustrent les figures 3 et 4, les antennes des radars secondaires de contrôle du trafic aérien (ATC) présentent classiquement, du fait du faible écart existant entre les fréquences rayonnées par le radar et par le transpondeur, 1030 MHz et 1090 MHz respectivement, des diagrammes voie Somme, voie Différence et voie Contrôle très similaires en émission et en réception, tant en élévation qu'en azimut. On note juste une légère différence de gain maximum, souvent de l'ordre de 1 dB, entre les fréquences de 1030 MHz et de 1090 MHz.

Néanmoins, bien que les différences constatées soient faibles, la mise en œuvre des différentes opérations de contrôle effectuées par le procédé selon l'invention sont préférentiellement réalisées en considérant le diagramme d'antenne rendant le mieux compte des caractéristiques de l'antenne entrant en jeu dans la mesure considérée, de façon à garantir la meilleure précision.

Ainsi par exemple:

- pour le contrôle de la Sensibilité du transpondeur (étape 12), on considérera le diagramme 31 du lobe principal de la voie Somme à la fréquence 1030 MHz (fréquence d'émission radar);
- pour le contrôle de la Puissance du transpondeur (étape 11), on considérera le diagramme 32 du lobe principal de la voie Somme à la fréquence 1090 Mhz (fréquence d'émission du transpondeur).

L'illustration de la figure 5, permet de présenter de manière simple à travers un cas idéal le principe de fonctionnement, en mode opérationnel, de la gestion par le radar des interrogations et réponses sélectives en Mode S, pour un aéronef donné localisé dans le lobe principal 31 (lobe émission à 1030 MHz), 32 (lobe réception à 1090 MHz) de la voie Somme de l'antenne 21.

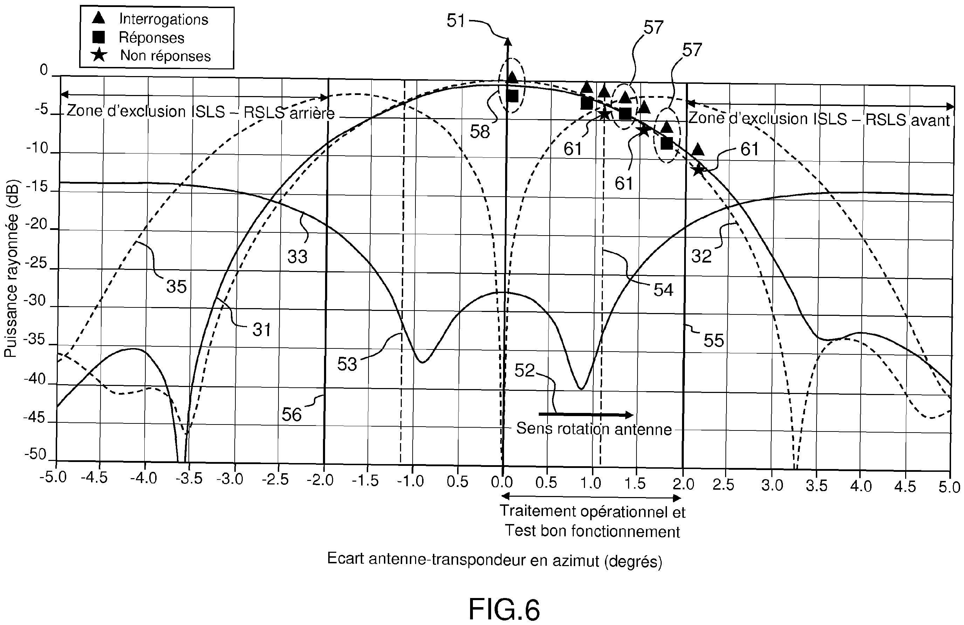

Concernant la figure 5, ainsi que les figures 6 à 9, il est à noter que lors de la rotation de l'antenne 21, l'axe principal de cette dernière se décale en azimut suivant les azimuts géographiques croissants (comme indiqué par la flèche 52), de sorte qu'en considérant la direction de l'axe principal 51 comme référence en azimut quel que soit l'instant considéré, les illustrations des figures 5 à 9 permettent de représenter la variation au cours du temps de la position en azimut d'un aéronef donné relativement à l'axe principal de l'antenne.

Par suite, un aéronef éclairé par le lobe principal de la voie Somme de l'antenne verra sa position sur les figures 5 à 9 se décaler, au cours du temps, de la droite vers la gauche de la figure considérée.

La gestion nominale du fonctionnement du radar a pour fonction de faire en sorte, de manière connue, que le transpondeur d'un aéronef considéré soit interrogé au moins une fois lorsque ce dernier se trouve localisé dans la zone utile lobe principal 31-32 de la voie Somme de l'antenne (zone entre les 2 lignes verticales pointillées 53 et 54 sur la figure 5) là où, de manière connue, la fonction monopulse du radar, qui fait appel aux signaux reçus par la voie Différence 35 (voie $\Delta$), permet de localiser la cible en azimut de manière précise.

Pour cela, l'organe de gestion du radar prédit la position de l'aéronef en azimut géographique pour le tour d'antenne considéré et ne commence à interroger sélectivement la cible qu'à partir de l'instant où, compte tenu de la vitesse de rotation de l'antenne 21 (ou de balayage du faisceau), le bord avant du lobe principal 31-32 de la voie Somme de l'antenne coupe l'azimut géographique prédit de la cible. Cet instant est matérialisé par la ligne continue 55 sur la figure 5. La ligne 55 est définie a priori en fonction de la position prédite de l'aéronef et du paramétrage des fonctions ISLS et RSLS ainsi que de la largeur du lobe principal 31-32 de l'antenne. De même, la ligne 56 délimite le bord arrière du lobe principal 31-32.

Passé l'instant de franchissement de la ligne 55 l'avion peut potentiellement être détecté selon la prévision de position, azimut et distance, calculée à partir des tours antérieurs. le radar effectue les transactions 57 et 58 (interrogations et réponses sélectives) relatives à l'aéronef considéré pendant que le lobe d'antenne se déplace (i.e. effectue un balayage de l'espace) en azimut.

Les transactions 57 en début de lobe servent à effectuer des échanges de données entre le radar et l'avion. Si une première interrogation (l'étoile) ne provoque pas de réponse (dans le cas du dessin à cause de l'exclusion de ISLS - RSLS) le radar positionne une autre interrogation pour ce même aéronef lors de la prochaine période Roll Call.

Le radar effectue en outre une transaction 58 alors que l'aéronef se trouve placé sensiblement sur l'axe du lobe d'antenne 31-32 du fait de la rotation de l'antenne. Cette transaction réalisée pour cette position particulière de l'aéronef dans le lobe d'antenne 31-32 permet avantageusement d'effectuer, de manière connue, une mesure précise de l'azimut de la cible. Cette position angulaire précise est utilisée pour déterminer les instants entre lesquels une opération de test peut être réalisée.

Il est à noter que, de par son fonctionnement, le radar est cohérent de ce principe de fonctionnement. Pour tout écart en azimut supérieur à celui correspondant à la ligne 55 ou inférieur à celui correspondant à la ligne 56 :

- la fonction ISLS active à l'émission, bloque le transpondeur
- la fonction RSLS active en réception, élimine les réponses asynchrones reçues par les lobes secondaires ou reçues par les zones externes du lobe principal 32. Ces zones externes sont notamment les zones du lobe principal du diagramme voie Somme situées en dehors d'une zone angulaire centrale, s'étendant typiquement en azimut sur $\pm 2°$ pour une antenne de radar secondaire ATC autour de l'axe central 51 du lobe principal voie Somme 32.

Par réponses asynchrones on entend des réponses émises par l'aéronef en réponse à des interrogations effectuées par d'autres radars, ou encore des messages émis par le transpondeur de manière non sollicité.

On définit ainsi deux zones d'exclusion: une zone d'exclusion ISLS - RSLS avant (azimuts supérieurs à l'azimut matérialisé par la ligne 55) et une zone d'exclusion ISLS - RSLS arrière (azimuts inférieurs à l'azimut matérialisé par la ligne 56), comme illustré par la figure 5.

De manière classique, le bilan radar en Mode S est équilibré entre le lien montant (interrogation du radar à 1030MHz) et le lien descendant (réponse du transpondeur à 1090MHz).

De la sorte, quelle que soit la distance de la cible, les réponses sollicitées par le radar, c'est à dire les réponses répondant aux interrogations détectées par le transpondeur, sont détectables par le radar.

Pour cela le lien descendant est préférentiellement légèrement plus performant que le lien montant afin que toutes les réponses émises, par le maillon le plus faible que constitue le transpondeur, puissent être correctement détectées par celui qui les a sollicitées.

La structure type de radar secondaire auquel peut s'appliquer le procédé selon l'invention, ainsi que le principe de gestion des transactions en Mode S, ayant été décrit de manière générale dans le texte qui précède, on s'intéresse à l'implémentation des différentes étapes du procédé selon l'invention.

Comme cela a été dit précédemment, la première étape 11 peut être implémentée sans nécessiter de modifier les paramètres du radar ni son séquencement opérationnel.

Cette première étape comporte une première opération 111 consistant à mesurer la puissance d'émission du transpondeur considéré; ainsi qu'une seconde opération 112 consistant à mesurer le taux de réponse moyen local du transpondeur.

Selon l'invention, la première opération 111 de calcul de la puissance d'un transpondeur peut être effectuée sur l'ensemble des aéronefs localisés dans la zone de couverture du radar. La fréquence considérée ici est la fréquence de réception de 1090 MHz.

Pour cette opération, le radar mesure, pour la réponse obtenue du transpondeur considéré principalement pour chaque transaction ayant lieu dans une zone délimitée par le lignes pointillées 53 et 54 (cf. figure 5) pouvant s'étendre, si besoin, jusqu'à la zone délimitée par les lignes 55 et 56, la puissance du signal reçu et calcule la puissance correspondante dans la zone de gain maximal de l'antenne radar, autrement dit la puissance qui aurait été mesurée si le même signal avait été reçu par l'antenne 21 au point de gain maximal (sommet) du lobe d'antenne 32.

Selon l'invention, le calcul opéré introduit l'atténuation consécutive au dépointage en azimut de la direction du signal portant la réponse reçue par rapport à l'axe du lobe d'antenne et tient compte de la déformation du lobe en azimut en fonction de l'élévation de la cible. Cette déformation reste cependant mineure pour des élévations faibles.

Par suite la première opération 111 de l'étape 11 consiste à :

- Calculer, pour chaque réponse, la puissance du signal (plot) reçu par le radar
- calculer la moyenne des puissances calculées pour les réponses les plus proches de l'axe de l'antenne (réponses présentant les dépointages les plus faibles);
- pondérer la moyenne obtenue pour tenir compte de l'atténuation en élévation, c'est-à-dire en considérant la décroissance de gain pour l'élévation réelle de la cible avec le gain maximal de l'antenne en élévation;
- calculer la puissance émise par le transpondeur en tenant compte des pertes de transmission diverses, à savoir les pertes propres aux éléments du radar tels que les câbles et le joint tournant mais aussi les pertes de propagation à la fréquence de 1090MHz dues à la distance entre le radar et l'aéronef, voire même les pertes atmosphériques caractéristiques du site radar et de la position de l'aéronef vis-à-vis du radar en distance et élévation;
- comparer la valeur de la puissance émise calculée à un seuil déterminé en fonction des prescriptions de l'OACI (Annexe 10) pour déterminer si la puissance du transpondeur est conforme à la puissance requise (transpondeur en conditions opérationnelles) ou si elle est insuffisante caractérisant un fonctionnement dégradé ou même défectueux.

La puissance ainsi calculée à partir de chaque réponse reçue par le radar peut être exprimée par la relation suivante :

$$P_{Tr} = P_{Recept} + L_{Lobe_azim} + \left(L_{Lobe_elev} - G_{Recept}\right) + L_{Recept} + \left(L_{Atm} + L_{Lobe\,Tr} + R + f(fréquence)\right) \qquad [01]$$

où:

$P_{Tr}$ représente la puissance rayonnée par le transpondeur (en dBm) vue par le radar, à une fréquence de 1090 MHz;
$P_{Recept}$, la puissance d'une réponse reçue par le récepteur du radar (en dBm);
$L_{Lobe_azim}$, la perte de gain de l'antenne radar en fonction de l'azimut (en dB);
$L_{Lobe_elev}$, la perte de gain de l'antenne radar en fonction de l'élévation (en dB),
$G_{Recept}$, le gain maximal de l'antenne radar en réception (en dB),
$L_{Recept}$, les pertes entre le récepteur radar et son antenne (en dB),
$L_{Atm}$, les pertes atmosphériques (en dB),
$L_{Lobe_Tr}$, la perte de gain de l'antenne du transpondeur en élévation (en dB),

R, les pertes de propagation dues à la distance entre l'aéronef et le radar (en dB),
*f*(*fréquence*), une constante fonction de la fréquence 1090MHz.

La plupart des grandeur précédentes sont établis pour chaque radar lors de sa fabrication en usine ($G_{Recept}$) et son installation sur site ($L_{Recept}$), d'autres sont calculés dynamiquement en fonction de la position de la cible (R, $L_{Lobe_Tr}$, $L_{Atm}$, $L_{Lobe_elev}$), voire de la réponse dans le lobe ($L_{Lobe_azim}$,).

Il est à noter que le concept de l'opération 111 décrite ci-dessus peut être appliqué à tout type de transpondeur (Mode S, SSR ou IFF).

Par ailleurs, le concept de l'opération 111 s'applique à tout type de réponses émises par un transpondeur, même à celles déclenchées par les interrogations sélectives mode S supplémentaires générées pour l'exécution des étapes 12 et 13 du procédé selon l'invention.

La seconde opération 112 de mesure du taux de réponse moyen local du transpondeur consiste à comptabiliser, sur l'ensemble des transactions effectuées par le radar vis-à-vis du transpondeur considéré, le nombre de transactions pour lesquelles une interrogation a effectivement été suivie d'une réponse de la part du transpondeur.

Un transpondeur n'est, en effet, parfois pas en mesure, pour diverses raisons, de répondre à toutes les interrogations sélectives qui lui ont été adressées par le radar pour un lobe d'antenne donné, comme l'illustre la voir figure 6. Par suite, certaines interrogations 61 peuvent rester sans réponse.

Cette absence de réponse peut s'expliquer par un taux d'occupation trop important du transpondeur, qui peut par exemple être sollicité par d'autres interrogateurs (radars, WAM ou "Wide Araea Multilateration", etc....), auquel cas elle ne constitue pas nécessairement un symptôme de défaillance du transpondeur.

Cependant, l'absence de réponse systématique aux interrogations du radar peut aussi être consécutive à des problèmes de fonctionnement du transpondeur. Aussi, il est avantageux du point de vue du contrôle de l'état du transpondeur de mesurer le taux de réponse de ce dernier.

Pour réaliser cette mesure, après avoir procédé à une localisation précise de la cible (transaction 58), le procédé selon l'invention effectue pour chaque tour d'antenne, le décompte du nombre d'interrogations envoyées au transpondeur considéré et du nombre de réponses obtenues dans la zone en azimut s'étendant entre les droites 55 et 56, dans laquelle le transpondeur se doit de répondre et le radar de recevoir, et accumule de tour à tour le résultat obtenu de façon à déterminer le taux de réponse moyen du transpondeur. Ce taux moyen local est calculé de manière glissante, sur un nombre donné de tours d'antenne, autrement dit un nombre donné de passages du lobe d'antenne sur l'aéronef équipé du transpondeur considéré.

Par suite en fonction de la valeur de ce taux moyen local, le transpondeur est considéré soit comme étant en état de fonctionnement nominal (opérationnel) conforme aux spécifications édictées par l'OACI, soit comme fonctionnant de façon dégradée vis-à-vis du radar,

Selon l'invention, ce taux moyen est calculé en tenant également compte :

- du réglage du radar (RSLS, ISLS) et de la distance de la cible pour définir le lobe effectif (EBW ou "Effective Beam Width");
- du fait qu'une réponse détectée, mais non décodée par le radar pour cause de chevauchement de réponses, est ici considérée comme une réponse du transpondeur (bien que non décodée par le radar), de façon à ne pas pénaliser la performance du transpondeur du fait des limites de détection du radar.

Il est à noter ici qu'un faible taux de réponse peut être lié au passage de l'aéronef dans une zone géographique de sur-interrogation, une zone couverte par plusieurs interrogateurs par exemple, ce qui fait décroitre, pour cette zone particulière, le taux de réponse local du transpondeur aux interrogations du radar considéré.

Cependant, cette chute du taux de réponse local, imputable ou non à un dysfonctionnement du transpondeur interrogé, peut cependant être prise en compte de manière automatique ou par choix de l'opérateur du radar pour adapter le comportement opérationnel du radar, par exemple pour augmenter le nombre d'interrogations sélectives pour les aéronefs dont le transpondeur affiche avec un mauvais taux de réponse moyen et qui évoluent à l'intérieur de zones sensibles dans lesquelles le suivi permanent de tous les aéronefs est requis.

Il est à noter également, que dans le contexte d'un fonctionnement multi-radars, permettant l'exécution de l'opération 113 du procédé selon l'invention, le radar considéré transmet à chaque tour d'antenne, par exemple au centre de contrôle du trafic dont il dépend, les transactions opérées pour chaque cible dans le lobe effectif de l'antenne. Chaque élément d'une transaction Mode S (i.e. chaque interrogation ainsi que la réponse attendue - obtenue ou non) est datée précisément.

Par suite, dans les zones de couverture commune à plusieurs senseurs le centre de contrôle peut alors :

- calculer par unité de temps (typiquement la seconde glissante) un taux de réponse moyen global pour chaque aéronef évoluant dans une zone de surveillance commune: ce chiffre traduit réellement le taux de réponse moyen du transpondeur et permet de déterminer si une défaillance du transpondeur considéré est réellement constatée;

- recenser les zones géographiques dans lesquelles ce taux de réponse moyen des aéronefs se dégrade: cette connaissance des zones géographique à sur-interrogation, peut conduire à modifier les réglages des senseurs qui interviennent dans ces zones de façon à améliorer ainsi la sécurité du contrôle réalisé.

Il est à noter que le concept de l'opération 112 décrite ci-dessus peut être appliqué à tout type de transpondeur (Mode S, SSR ou IFF).

La deuxième étape 12 de mesure de la Sensibilité du transpondeur consiste à transmettre au transpondeur, pour un même tour d'antenne, une succession d'interrogations, le signal véhiculant cette interrogation présentant une puissance qui diminue ou augmente d'une interrogation à la suivante, puis en détectant la réception des réponses correspondantes.

La sensibilité du transpondeur est alors définie par la moyenne de la puissance de signal transmise au transpondeur pour la dernière interrogation à laquelle le transpondeur a répondu et de celle pour laquelle le transpondeur n'a pas répondu.

Cette sensibilité est ensuite comparée à un seuil fixé en fonction duquel on considère la sensibilité du transpondeur est conforme ou non aux spécifications édictées par l'OACI.

La mise en oeuvre de cette étape nécessite de modifier le niveau de signal transmis par le radar au transpondeur de manière dynamique. Par modification dynamique on entend ici que le réglage du radar doit être réalisé indépendamment pour chaque transaction (interrogation/réponse) engagée avec l'aéronef considéré.

Selon l'invention, cette étape est préférentiellement mise en œuvre lorsque l'aéronef considéré est à distance proche ou moyenne du radar interrogateur, une distance inférieure à 120 Nm typiquement.

Par ailleurs, l'objectif de l'étape 12 étant de mesurer les caractéristiques relatives au lien montant (ce lien incluant le récepteur du transpondeur), Il est nécessaire que le lien descendant (i.e. le lien transpondeur-radar) ne soit plus désensibilisé de sorte que l'échec d'une transaction ne puisse pas être imputable à une perte de sensibilité du radar.

A cet effet, dans le cadre du procédé selon l'invention, les mesures de sensibilité sont réalisées en inhibant, au niveau de la réception, la fonction TVBC ("Time Variable Based Clamping" selon la dénomination anglo-saxonne) durant l'interrogation du transpondeur.

On rappelle ici que, de manière connue, la fonction TVBC est une fonction, couramment implémentée dans les radars secondaires, qui agit vis-à-vis du signal reçu par le radar de façon à limiter la formation de faux plots à courte et moyenne portée. Elle assure ainsi une dynamique de signal reçu quasi constante, dont l'amplitude (en dB) est déterminée par le numéro de la loi TVBC choisie par l'opérateur.

A cet effet également, pour être sûr qu'une perte de détection soit réellement imputable à la sensibilité du transpondeur et non à une autre cause, on diminue l'énergie émise par le radar en direction du transpondeur interrogé, de façon à favoriser le lien descendant (i.e. le lien transpondeur-radar) vis-à-vis du lien montant (i.e. le lien radar-transpondeur). On applique par exemple une atténuation dynamique de l'ordre de 20 dB au niveau de l'émission du radar pour la cible considérée uniquement.

Pour atténuer encore plus le niveau de signal transmis au transpondeur de manière dynamique, le procédé selon l'invention propose différentes solutions.

Une première solution consiste à faire varier, d'une interrogation à la suivante, le niveau de signal transmis au transpondeur par le lobe principal voie Somme de l'antenne. On fait alors varier cette puissance transmise jusqu'à une valeur suffisante pour obtenir une non-détection de l'interrogation de la part du transpondeur.

Selon une première forme de mise en oeuvre de cette première solution, non illustrée, applicable lorsque l'émetteur du radar peut être commandé pour délivrer avec la précision voulue une puissance donnée comprise dans une plage variable, la dynamique de variation étant par ailleurs suffisante, la mesure de sensibilité du transpondeur est réalisée en interrogeant le transpondeur considéré en faisant varier la puissance délivrée par l'émetteur radar à travers le lobe principal voie Somme de l'antenne, d'une interrogation à l'autre, par dichotomie, en débutant au voisinage de la valeur théorique de sensibilité du transpondeur, jusqu'à ce que pour une puissance donnée, on constate une absence de réponse de ce dernier. Cette opération peut être réalisée sitôt que les interrogations opérationnelles 57 et 58 du transpondeur par le radar sont effectuées à la puissance nominale.

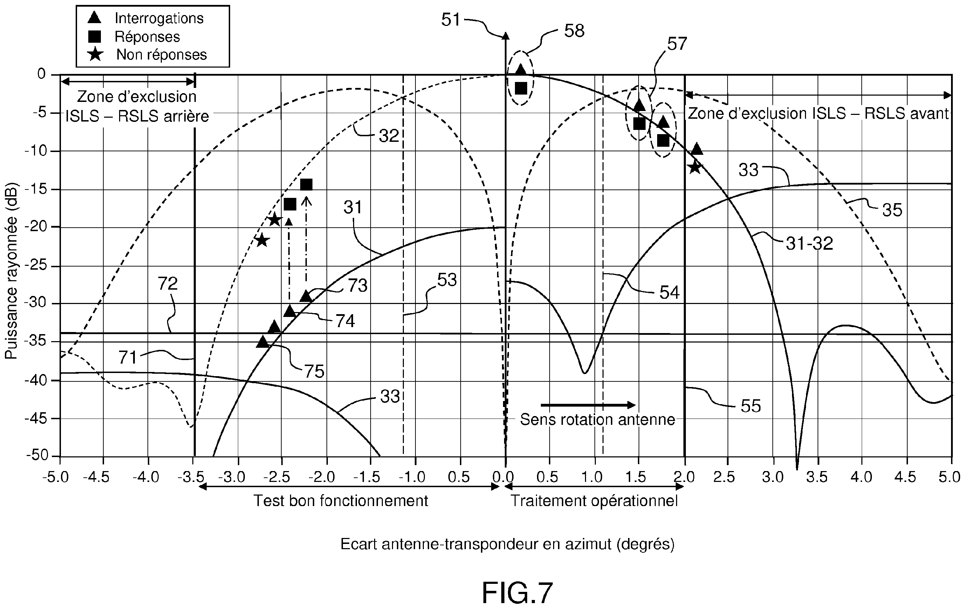

Alternativement, selon une seconde forme de mise en oeuvre de cette première solution, applicable notamment si les caractéristiques de l'émetteur radar ne permettent pas de mesurer la sensibilité du transpondeur avec la précision requise par atténuation directe de la puissance émise (cas où l'aéronef est très proche du radar par exemple), la mesure de sensibilité du transpondeur est réalisée, en mettant à profit la variation au cours du temps du dépointage du lobe principal d'antenne par rapport à l'azimut de l'aéronef, comme l'illustre la figure 7, de façon à obtenir une variation de la puissance rayonnée en direction de l'aéronef.

Selon l'invention, des interrogations supplémentaires successives du transpondeur sont émises par le radar (à 1030 MHz), après que les interrogations opérationnelles 57 et 58 du transpondeur sont effectuées à la puissance nominale et sitôt que le dépointage du lobe principal voie Somme de l'antenne est suffisant pour que la puissance émise en direction du transpondeur soit à un niveau proche du seuil théorique 61 de sensibilité de ce dernier tout en étant un peu supérieur, un niveau supérieur de +6 dB au seuil théorique 72 par exemple. Ces interrogations successives sont agencées dans le temps de façon à ce que la mesure encadre la valeur du seuil théorique. La droite 72 matérialise ce seuil théorique sur la figure 7.

Dès lors que le dépointage correspondant, ou dépointage de départ, est atteint, le radar effectue une première interrogation 73 du transpondeur à tester et attend la réponse de celui-ci.

Par suite, si dès cette première interrogation 73, qui intervient pour un dépointage pour lequel la puissance rayonnée vers le transpondeur est supérieure de +6 dB au seuil théorique 72, une réponse est reçue, des interrogations supplémentaires successives 74 sont émises par le radar vers le transpondeur à mesurer, le niveau de signal émis vers le transpondeur diminuant à chaque interrogation du fait de la variation du dépointage.

Selon l'invention, des interrogations supplémentaires 74 sont alors émises jusqu'à ce que:

- pour une interrogation donnée 75, aucune réponse ne parvienne au radar ; ou que

- le dépointage du lobe principal d'antenne 32 atteigne une valeur, considérée comme limite, pour laquelle l'aéronef est en passe de sortir de la zone couverte par le lobe principal voie Somme de l'antenne, un dépointage de -3.5° typiquement pour le type d'antenne généralement utilisé. Cette limite est matérialisée par la ligne 71 sur la figure 7.

Dans le premier cas, les interrogations supplémentaires 74 sont alors arrêtées et la valeur de la moyenne de la puissance de signal transmise au transpondeur pour la dernière interrogation 74 à laquelle le transpondeur a répondu et de celle pour laquelle le transpondeur n'a pas répondu, est considérée comme correspondant au niveau de sensibilité réel du transpondeur.

Dans le second cas, le dépointage limite étant atteint sans qu'aucune interrogation 74 soit restée sans réponse, la mesure est réitérée au tour d'antenne suivant, en passant, par exemple, l'atténuation de 20 dB appliquée initialement au niveau de l'émission du radar, à une atténuation supérieure, égale à 30 dB.

Inversement, si dès la première interrogation 73, aucune réponse n'est reçue, la mesure est réitérée au tour suivant, en débutant l'opération de mesure avec une marge de puissance plus grande, une marge de +10 dB par exemple, c'est-à-dire en mettant une interrogation 73 pour un dépointage plus faible du lobe principal voie Somme 32 de l'antenne. L'opération étant répétée de tour à tour jusqu'à ce qu'une réponse à la première interrogation 73 soit reçue. La sensibilité est ensuite déterminée comme exposé précédemment en déterminant la première interrogation sans réponse suivant cette première interrogation suivie d'une réponse.

Il est à noter que, le fait de devoir relever la marge de puissance pour pouvoir obtenir une première interrogation suivie d'une réponse, constitue un fait symptomatique d'une défaillance de sensibilité du transpondeur et qu'il est nécessaire, par sécurité, de le mesurer précisément.

Par suite, connaissant le dépointage du lobe d'antenne par rapport au transpondeur, dépointage mesuré pour la dernière interrogation ayant reçu une réponse du transpondeur, la sensibilité $S_{Tr}$ du transpondeur (à 1030 MHz) mesurée au niveau de l'antenne de l'aéronef peut être exprimée par la relation suivante (relation similaire à la relation [01] exprimant la valeur de la puissance du transpondeur):

$$S_{Tr} = \\ = P_{Radar} - L_{Lobe\,azim} - L_{Lobe\,elev} + G_{Radar} - L_{Radar} \\ - (L_{Atm} + L_{lobe\,Tr} + R + f(fréquence)) \qquad [02]$$

où:

$P_{Radar}$, représente la puissance (en dBm) du signal d'interrogation effectivement générée par l'émetteur du radar;
LLobe azim, la variation (en dB) de gain en azimut de l'antenne radar;
LLobe elev, la variation (en dB) de gain en élévation de l'antenne radar;
$G_{Radar}$, le gain maximal (en dB) de l'antenne radar en émission;
$L_{Radar}$, les pertes (en dB) entre l'émetteur radar et son antenne;
$L_{Atm}$, les pertes atmosphériques (en dB);
LLobe tr, la variation (en dB) de gain en élévation de l'antenne transpondeur;
*R*, les pertes de propagation (en dB),
*f*(*fréquence*), une constante fonction de la fréquence 1030 MHz.

Il est à noter ici que pour pouvoir utiliser largement la partie arrière du lobe principal voie Somme de l'antenne, entre -2° et -3,5°, il faut, comme l'illustre la figure 7, inhiber l'action de la fonction ISLS et diminuer très notablement le seuil d'action de la fonction RSLS.

Pour modifier le niveau de signal transmis au transpondeur de manière dynamique, une troisième solution consiste à émettre les interrogations radar par la voie Différence de l'antenne et non pas par la voie Somme de façon à utiliser la pente du diagramme Différence 35, usuellement utilisé en réception (à la fréquence 1090 MHz) pour la fonction écartométrie monopulse. L'utilisation de la voie Différence permet avantageusement d'émettre les interrogations sélectives dont l'amplitude varie cette fois en croissant progressivement en fonction du dépointage de la cible dans le lobe d'antenne à partir de la position de l'axe 51.

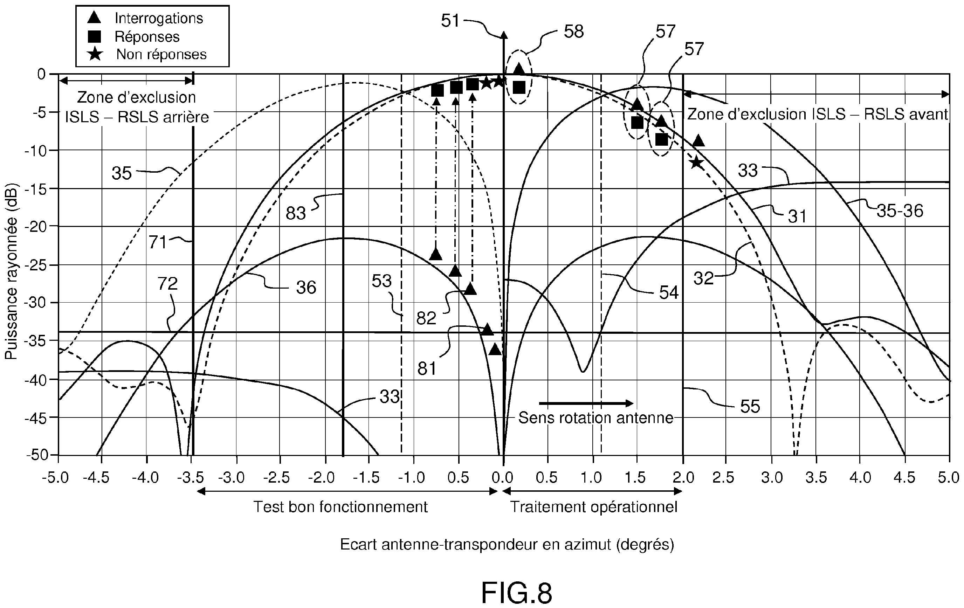

Selon cette troisième solution, illustrée par la figure 8, le radar transmet, vers le transpondeur considéré, via le diagramme 36b de la voie Différence de l'antenne (voie DIFF émission), des interrogations sélectives supplémentaires 81-82, successives. Cette opération est réalisée sitôt que les interrogations opérationnelles 57 et 58 du transpondeur par le radar sont effectuées.

La variation de niveau de ces interrogations, permettant d'encadrer le seuil théorique 72 de sensibilité du transpondeur, est obtenue en utilisant la variation du dépointage du lobe d'antenne par rapport à l'azimut du transpondeur et la forte variation de gain du diagramme de la voie Différence pour des valeurs de dépointage faible.

Cette forte variation de gain permet, par exemple, de réaliser des interrogations supplémentaires 81, 82 pour lesquels la puissance transmise par l'émetteur au transpondeur peut varier de façon à encadrer le seuil théorique 72 dans une plage de l'ordre ±10 dB par exemple, comme l'illustre la figure 8, cette plage de puissance émise correspondant à une plage de dépointage donnée.

Selon l'invention, des interrogations supplémentaires 81-82 successives du transpondeur sont émises par le radar par la voie DIFF (courbe 36) à 1030 MHz, à puissance atténuée si besoin, selon la distance de l'avion, après que les interrogations opérationnelles 57 et 58 du transpondeur ont été effectuées à la puissance nominale et sitôt que le dépointage du lobe principal voie Somme de l'antenne est suffisant pour que la puissance émise via le lobe voie DIFF 36 en direction du transpondeur soit à un niveau proche du seuil théorique 72 de sensibilité de ce dernier tout en étant un peu inférieure, un niveau inférieur de 10 dB au seuil théorique 72 par exemple. Ces interrogations successives 81-82 sont agencées dans le temps de façon à ce que la mesure encadre la valeur du seuil théorique.

Dès lors que le dépointage correspondant, ou dépointage de départ, est atteint, le radar effectue une première interrogation 81 du transpondeur à tester et attend la réponse de celui-ci. Dès la première réponse du transpondeur, les interrogations supplémentaires 81 sont alors arrêtées et la valeur de la moyenne, entre la puissance de signal transmise au transpondeur pour la première interrogation 82 à laquelle le transpondeur a répondu et la dernière interrogation 81 à laquelle le transpondeur n'a pas répondu, est considérée comme correspondant au niveau de sensibilité réel du transpondeur.

Par suite, si dès la première interrogation 81, avec un niveau de puissance transmise au transpondeur inférieur de 10 dB au seuil théorique de sensibilité 72, le radar reçoit des réponses du transpondeur, on réitère la mesure au tour d'antenne suivant, en transmettant la première interrogation 81 pour un dépointage correspondant un niveau de puissance transmis plus faible, un niveau inférieur de 15 dB au seuil théorique de sensibilité, par exemple.

Le fait de devoir relever, de 10 dB à 15 dB par exemple, la marge de puissance autour du seuil théorique 72 constitue un fait symptomatique de la forte sensibilité du transpondeur interrogé, le transpondeur pouvant alors être considéré comme trop sensible et donc défectueux.

Si, en revanche, le transpondeur ne répond à aucune des interrogations 81-82 émises dans la plage de puissance considérée, une plage de ±10 dB autour du seuil de sensibilité théorique 72, les interrogations sont poursuivies avec un niveau de plus en plus fort, autrement dit avec un dépointage de plus en plus grand, en se limitant toutefois à un dépointage correspondant au gain maximum du diagramme voie Différence de l'antenne, dépointage matérialisé par la droite 83 sur la figure 8 (un dépointage de -1.8° typiquement pour une antenne de radar secondaire).

Par suite si aucune réponse n'est transmise par le transpondeur pour ce niveau de puissance émise, on réitère la mesure au tour d'antenne suivant, en augmentant la puissance émise par le radar, en passant, par exemple, de l'atténuation de 20 dB appliquée initialement au niveau de l'émission du radar, à une atténuation de 10 dB.

Le fait de devoir relever la puissance émise pour pouvoir obtenir une première interrogation suivie d'une réponse, constitue un fait symptomatique d'une défaillance possible du transpondeur.

Il est à noter ici que pour pouvoir mettre à profit cette partie du lobe pour effectuer des transactions avec le transpondeur considéré, il faut inhiber l'action de la fonction ISLS et diminuer très notablement le seuil d'action de la fonction RSLS, dans la zone du diagramme où l'on effectue les interrogations 81-82 (atténuation de la puissance émise sur la voie CONT).

L'invention propose aussi de combiner les secondes et troisièmes solutions lors du même tour d'antenne pour mesurer plus rapidement la sensibilité

La troisième étape 13 effectue le test du taux maximal de réponse d'un transpondeur. On rappelle ici que les valeurs de taux de réponse maximal attendus pour un transpondeur mode S sont dictées par les normes de l'OACI.

Ces valeurs diffèrent selon la durée du test effectué et la catégorie à laquelle le transpondeur appartient.

A ce jour, ces valeurs prescrites sont résumées dans le tableau ci-après.

| Intervalle(ms) | réponses mode S courtes | Réponses mode transpondeur niveau 2, 3 ou 4 | S longues transpondeur niveau 5 |
|---|---|---|---|
| 25 | 8 | 4 | 6 |
| 100 | 18 | 6 sur 18 | 9 sur 18 |

Ainsi pour mesurer le taux maximal de réponse en mode S d'un transpondeur, il convient de tenir compte du type de tâche de surveillance effectuée par le radar interrogateur et des caractéristiques du transpondeur (qu'il déclare lors de la phase opérationnelle).

Le tableau ci-après donne des valeurs typiques de paramètres radar permettant de déterminer pour un radar donné, les conditions de mesure appropriées.

| Configuration radar | Période antenne (sec) | Durée (ms) du lobe monopulse (2.4°) | Durée (ms) du lobe maximal (7°) |
|---|---|---|---|
| Aéroport | 4 | 26.6 | 77.8 |
| Surveillance | 6 | 40 | 116.6 |
| En-Route | 10 | 66 | 194.4 |

Ainsi, selon la durée d'éclairement dans la configuration radar considérée (i.e. avec une vitesse de rotation d'antenne et une extension du lobe Somme données), il sera possible de vérifier l'exigence sur une base de temps de 25 ms seulement ou de 25 ms ou 100 ms au choix.

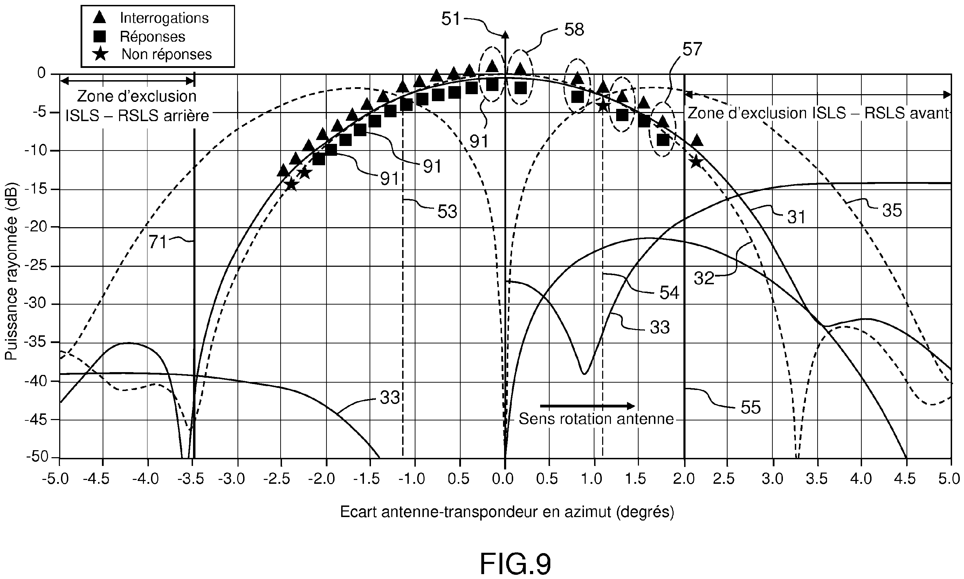

Comme l'illustre la figure 9, pour réaliser cette étape du procédé selon l'invention le radar émet, pendant un intervalle de temps court de durée donnée, typiquement inférieur à 100ms, des interrogations successives vers le transpondeur considéré. Ces interrogations supplémentaires 91 débutent dès que la dernière interrogation sélective opérationnelle 58 a été exécutée avec succès pour la configuration considérée.

Les interrogations supplémentaires 91 émises qui donnent lieu à une réponse de la part du transpondeur sont comptabilisées et déterminent le taux de réponse maximale.

Par suite ce taux est utilisé pour déterminer si le transpondeur considéré répond aux critères imposés.

Selon l'invention, le nombre d'interrogations sélectives supplémentaires 91 à transmettre au transpondeur par période "Roll Call" est déterminé en tenant compte :

- du nombre de Roll Call exécutables dans le temps disponible, 25 ms ou 100 ms,
- de l'objectif de la mesure, cet objectif pouvant être:
    - le contrôle de la tenue de la limite prescrite par l'OACI,
    - la recherche du nombre maximal de réponses que peut produire le transpondeur dans le temps imparti au test,

Il est à noter ici que pour permettre de disposer d'un intervalle de temps suffisant pour placer le nombre d'interrogations supplémentaires requis pour réaliser le test souhaité, il est nécessaire de pouvoir exploiter le lobe principal voie Somme de l'antenne au-delà de la zone normalement utilisée pour les interrogations opérationnelles. Pour cela il est nécessaire, lors des interrogations 91, d'inhiber l'action de la fonction ISLS et de diminuer dynamiquement, de manière très notable, le seuil d'action de la fonction RSLS au niveau des lobes arrière du diagramme 34.

Comme cela peut être constaté à partir de la description qui précède, le procédé de test selon l'invention, n'impose que peu de contrainte de fonctionnement au radar dans lequel il est implémenté. Cependant du fait en particulier du nombre d'interrogations supplémentaires qu'il implique, et des modifications du fonctionnement en temps réel qu'il peut nécessiter (modification de la puissance émise, inhibition de la fonction ISLS et désensibilisation de la fonction RSLS, il est destiné à être mis en oeuvre quand les conditions opérationnelles sont favorables pour réaliser le test d'un aéronef donné.

Ainsi, compte tenu des transactions supplémentaires pouvant être générées en phase de test par le radar, L'aéronef dont on test le transpondeur devra évoluer dans une zone de l'espace ne présentant pas de contrainte d'environnement particulière. En particulier, la mesure du taux de réponse du transpondeur qui requiert l'émission d'interrogations supplémentaires qui engendrent autant de réponses de la part du transpondeur sera préférentiellement mise en oeuvre alors que l'aéronef concerné évolue dans une zone particulière :

- ne se trouvant pas dans un secteur dont la couverture est partagée avec d'autres radars,
- ne se situant pas en limite de séparation du radar avec d'autres radars,
- se trouvant dans un secteur où le nombre d'aéronefs gérés par le radar considéré est relativement peu élevé, priorité étant donnée à chaque tour à la détection opérationnelle des cibles.

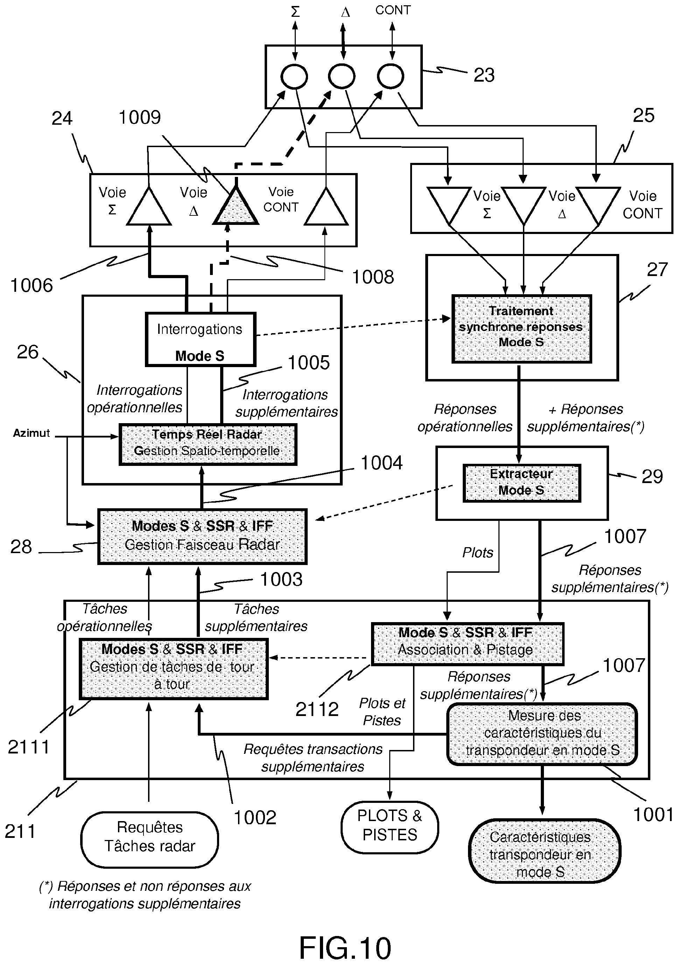

Pour sa mise en œuvre, le procédé selon l'invention ne nécessite avantageusement que quelques aménagements d'ordre fonctionnel du radar secondaire interrogateur. Ces aménagements, illustrés par la figure 10, consistent essentiellement en l'ajout de tâches de gestion de transactions supplémentaires, autrement dit de tâches de préparation et d'exécution d'interrogations à des instants appropriés, non utilisés pour exécuter les tâches de fonctionnement opérationnel, et des tâches de réception et de traitement des réponses à ces interrogations, émises par le transpondeur interrogé. Comme décrits précédemment ces transactions supplémentaires intéressent plus particulièrement les tâches 12 et 13 du procédé selon l'invention.

En pratique, comme l'illustre la figure 10, les différentes opérations nécessaires à l'exécution de ces transactions particulières sont codées au sein des logiciels de gestion qui contrôlent les différents sous-ensembles du radar impliqués dans les échanges radar-transpondeur.

Ainsi, le module 211 chargé de la gestion global des informations radar (réception 2111 de requêtes radar et élaboration du pistage 2112) peut être modifié pour prendre en charge la gestion globale 1001 de l'exécution des tests à implémenter sur les transpondeurs des aéronefs présents dans la zone couverte par le radar, à savoir les tests de sensibilité (étape 12 du procédé), de puissance d'émission (opération 111), de taux de réponse moyen local (opération 112) et de taux de réponse maximal (étape 13 du procédé).

De même, le module de Gestion dans le faisceau 28 peut être modifié pour incorporer une opération chargée de prendre en compte des requêtes 1003 de transactions supplémentaires transmises par le module 211, et de transmettre au module de gestion temps réel 26, en temps utile une transaction (interrogation, réponse), période de Roll Call après période de Roll Call dans le lobe d'antenne, voire plusieurs interrogations sélectives supplémentaires pour le même aéronef réparties dans une même période de Roll Call, un message de commande 1004 intégrant les commandes d'exécution d'interrogations supplémentaires 1005.

Le module 26 prend en compte ces commandes et transmet alors à la voie Somme de l'émetteur 24 des messages 1006, ou à la voie DIFF des messages 1008, relatifs à des interrogations opérationnelles ou à des interrogations de test, ainsi que les paramètres de fonctionnement associés aux différentes interrogations.

De même encore, le module extracteur 29 peut être modifié pour incorporer une fonctionnalité chargée de prendre en compte les réponses éventuelles aux interrogations supplémentaires émises par le radar et de séparer les réponses 1007 aux interrogations supplémentaires des réponses opérationnelles permettant de former les plots radar. Les réponses opérationnelles et les réponses 1007 aux interrogations supplémentaires sont alors prises en compte par la tâche de gestion globale 1001.

Ainsi, à l'exception de l'étape de mesure de sensibilité d'un transpondeur qui nécessite, pour une de ses formes de mise en oeuvre illustrée par la figure 8, une modification matérielle permettant au radar d'émettre ses interrogations par la voie Différence (voie $\Delta$) 36, les autres étapes du procédé selon l'invention ne demandent avantageusement aucune adaptation ou modification matérielle.

Il est à noter que la figure 10 est une illustration simplifiée du système illustré par la figure 2, étant entendu qu'en réalité les fonctions IFF et SSR ne sont pas représentées pour des raisons de clarté de la figure, leur présence n'étant pas, pour autant, remise en cause.

L'objet de l'invention étant de dépister, le plus efficacement possible les aéronefs comportant un transpondeur défaillant, l'exécution des tests du procédé selon l'invention pour un aéronef donné, est réalisée préférentiellement, en ce qui concerne les radars secondaires localisés dans des aéroports notamment, quand l'aéronef dont on souhaite tester le transpondeur vient de décoller et est encore à faible ou moyenne distance du radar ATC considéré. En effet la distance séparant l'aéronef du radar est alors encore suffisamment faible pour que, même si le transpondeur présente une puissance d'émission faible, le signal émis puisse encore être détecté et que les autres tests puissent être exécutés.

De la sorte un transpondeur défaillant peut être détecté et, en cas de défaillance avérée, des dispositions peuvent être prises, si besoin est, par le système de contrôle du trafic (ATC) notamment l'absence d'un second transpondeur rendant le vol de l'aéronef potentiellement dangereux sur de longues distances.

Par ailleurs, pour garantir des mesures fiables, la mise en oeuvre du procédé est de préférence effectuée lorsque l'aéronef est en vol stationnaire, pour éviter la pollution des mesures par des masques potentiels de l'antenne du transpondeur par la voilure de l'avion lors de l'évolution de celui-ci.

De plus, pour atteindre un niveau de précision et de fiabilité suffisant concernant les tests opérés, niveau par ailleurs absolument nécessaire pour pouvoir qualifier un transpondeur de défaillant suite aux valeurs mesurées, le procédé selon l'invention est répété sur plusieurs tours pour un même aéronef. En outre le procédé selon l'invention est mis en oeuvre pour contrôler le bon fonctionnement des transpondeurs d'aéronefs localisés dans des directions azimutales où la propagation des ondes entre le radar et l'aéronef considéré se fait en espace libre, de façon à limiter les perturbations liées à des obstacles (bâtiments, reliefs, éoliennes..) ou à des sources de réflexions multiples (toits de bâtiments, crêtes de montagnes gelées, ...).

Il est à noter que, bien que le procédé selon l'invention soit destiné à fournir des informations de mesure réalisées au niveau d'un radar secondaire donné, les données de mesure concernant le transpondeur d'un aéronef peuvent être mises à profit dans le cadre d'une approche globale de contrôle de l'état et de l'usage des aéronefs en service, ou approche HUMS ("Health and Usage monitoring System") selon la dénomination anglo-saxonne.

En effet les mesures faites à l'échelon d'un unique radar, dans les conditions d'environnement spécifiques au site dans lequel ce dernier est placé, peuvent être transmises à un centre de maintenance global, exploitant les réseaux existants de communication entre les radars et les Centres de Control ATC, afin d'être consolidées au niveau de plusieurs senseurs sur une grande période d'analyse permettant de suivre l'évolution au cours du temps du fonctionnement des équipements des aéronefs en service. La fusion des données provenant de différents radars permet avantageusement de disposer de plus de mesures et donc de plus de précision et surtout de fiabilité concernant les valeurs des paramètres contrôlés, en limitant l'influence inhérente à chaque site radar.

En particulier, l'opération 112 de l'étape 11, portant sur la mesure de taux moyen local de réponse d'un transpondeur, basiquement effectuée indépendamment par différents radars, peut être avantageusement enrichie en fonctionnement Multi-radars, en comptabilisant par unité de temps le taux de réponse moyen d'un aéronef sur l'ensemble des interrogations émises par différents radars interrogeant ce même aéronef pendant une période donnée, de façon à établir un taux moyen global de réponse du transpondeur plus précis, plus représentatif de la réalité, qui tienne compte de l'ensemble des transactions auxquelles il a pris part.

Dans une telle organisation, chaque radar transmet à chaque tour (rendez-vous), à un centre de gestion global du trafic par exemple, pour chaque aéronef, un plot enrichi de toutes les interrogations effectuées ainsi que des réponses transmises, ou non, par le transpondeur interrogé, datées précisément. Ces informations peuvent être fusionnées en considérant l'ensemble des radars gérants cet aéronef. Par suite, pour chaque aéronef, l'absence de réponse à une interrogation sélective n'est pas prise en compte pour le calcul du taux de réponse moyen global si celle-ci correspond temporellement à un instant pour lequel le transpondeur de l'aéronef concerné est en train de répondre à une interrogation sélective émise par autre radar. Si tel est le cas, le transpondeur ne pouvant traiter plusieurs interrogations simultanément, il est simplement déclaré occupé.

Dans le cadre du procédé selon l'invention, cette opération de prise en compte d'un fonctionnement intégré du radar est réalisée par une opération complémentaire 113 consistant à prendre en compte les informations relatives aux transactions effectuées par les autres radars en relation avec l'aéronef considéré et à corréler temporellement ces transactions pour déterminer, le cas échéant l'origine d'une absence de réponse à une interrogation. Les absences de réponses dont l'origine est liée à l'exécution par le transpondeur de transaction avec un autre radar, n'étant dans ce cas pas comptabilisées comme telles et le taux de réponse moyen global est établi sur la base de la présence ou non des réponses aux autres interrogations.

Les opérations de mesures implémentées dans le cadre du procédé selon l'invention, permettent ainsi avantageusement de réaliser un contrôle du bon fonctionnement du transpondeur d'un aéronef par un radar de contrôle, un radar ATC par exemple, alors même que ce dernier réalise le suivi opérationnel de l'aéronef considéré. Il n'est ainsi plus nécessaire de réaliser la dépose du transpondeur et son test en atelier de maintenance pour contrôler son bon fonctionnement, c'est-à-dire sa conformité aux spécifications de l'autorité de contrôle de l'aviation civile internationale. Ce contrôle peut être réalisé à tout moment lorsque l'aéronef se trouve dans la zone de contrôle du radar.

Par ailleurs, selon le temps disponible dont dispose le radar, le procédé selon l'invention peut être exécuté une seule fois, les résultats de chacune des mesures étant exploités dès la fin d'exécution du test correspondant. Cependant, de manière alternative, si la charge de travail opérationnelle le permet, les différentes étapes du procédé selon l'invention peuvent être répétées plusieurs fois. Les résultats successifs obtenus, pour chaque type de mesure, peuvent alors être utilisés conjointement pour calculer une valeur moyenne, pondérée du nombre d'échantillons utilisé pour chaque mesure, et des conditions d'obtention de celle-ci.

De même, le procédé selon l'invention peut être exécuté par différents radar pour le même aéronef. Les mesures réalisées par chaque radar peuvent alors avantageusement être transmises à un système de gestion de contrôle du trafic centralisé qui peut réaliser un lissage des résultats de mesures obtenus. Un tel lissage permet d'améliorer la fiabilité et la précision de mesure d'une caractéristique donnée du transpondeur en calculant une moyenne des mesures correspondantes effectuée par chaque radar, mesure pondérée du nombre d'échantillons utilisé pour chaque radar et des conditions d'obtention de la mesure considérée par chaque radar.

Par ailleurs également, du fait que les opérations exécutées ne nécessitent pas d'intervention sur le transpondeur considéré, elles peuvent avantageusement être exécutées de manière régulière et les résultats obtenus peuvent être sauvegardés. L'analyse de l'évolution des résultats de ces mesures au cours d'un temps long permettent, le cas échéant, de constater une dégradation progressive des performances du transpondeur et de planifier, si nécessaire des actions de maintenance du transpondeur avant que celui ne devienne non opérationnel.

## Revendications

1. Procédé pour réaliser le test de bon fonctionnement du transpondeur radar secondaire d'un aéronef évoluant dans une zone couverte par un radar secondaire de surveillance du trafic aérien, **caractérisé en ce qu'**il comporte:

   - une première étape (11) qui met en œuvre:
   - une opération (111) de mesure de la puissance émise par le transpondeur, à partir de la mesure de la puissance reçue du transpondeur en réponse à chaque interrogation émise par le radar;
   - une opération (112) de mesure du taux de réponse moyen local du transpondeur aux interrogations émises par le radar, réalisée en comptabilisant le nombre d'interrogations pour lesquelles le radar a reçu une réponse en provenance du transpondeur;

   la première étape étant réalisée alors que les paramètres de fonctionnement du radar ne sont pas modifiés par rapport aux paramètres de fonctionnement opérationnel;

   - une deuxième étape (12) qui met en oeuvre une opération de mesure de la sensibilité du transpondeur, réalisée en émettant des interrogations supplémentaires avec des niveaux de puissance d'émission croissants ou décroissants au cours du temps, et en déterminant le niveau de puissance émise lors de l'émission de la première interrogation en deçà duquel le transpondeur ne transmet pas de réponse;
   la deuxième étape étant réalisée en modifiant les paramètres de fonctionnement du radar de façon à ce que les interrogations supplémentaires requises pour la mesure puissent être réalisées, pendant l'intervalle de temps suivant la dernière interrogation opérationnelle durant lequel l'aéronef reste localisé dans le lobe principal voie Somme de l'antenne du radar, avec une puissance émise dans la direction du transpondeur encadrant le seuil de sensibilité du transpondeur;
   - une troisième étape (13) qui met en oeuvre une opération de mesure du taux de réponse maximal que peut soutenir le transpondeur pendant un intervalle de temps court de durée donnée, l'opération étant réalisée en émettant une pluralité d'interrogations supplémentaires et en comptabilisant les interrogations pour lesquelles le transpondeur a transmis des réponses;
   la troisième étape étant réalisée en modifiant les paramètres de fonctionnement du radar de façon à rendre possible l'émission, pendant l'intervalle de temps suivant la dernière interrogation opérationnelle pendant lequel l'aéronef reste localisé dans le lobe principal voie Somme de l'antenne du radar, d'un nombre d'interrogations successives suffisant pour occasionner une absence de réponse du transpondeur.

2. Procédé selon la revendication 1, **caractérisé en ce que** l'opération de mesure de puissance (111) de la première étape (11) est réalisée à partir des interrogations opérationnelles ou d'interrogations supplémentaires émises vers le transpondeur.

3. Procédé selon l'une des revendications 1 ou 2, **caractérisé en ce que** l'opération de mesure du taux de réponse moyen local du transpondeur (112) de la première étape (11) est réalisée en effectuant pour chaque tour d'antenne, le décompte du ratio entre le nombre d'interrogations envoyées au transpondeur et le nombre de réponses obtenues dans le lobe effectif EBW, et en calculant, de manière glissante, la valeur moyenne de ce ratio sur un nombre donné de tours d'antenne ou de rendez-vous d'antenne.

4. Procédé selon la revendication 3, **caractérisé en ce que**, dans une configuration de fonctionnement multi-radars, l'exécution de l'opération de mesure du taux de réponse moyen local du transpondeur (112) de la première étape (11) fait appel à une opération complémentaire (113) permettant de déterminer si, dans le cas d'une absence de réponse aux interrogations émises par le radar durant un intervalle de temps donné, l'aéronef interrogé est occupé par la transmission d'une réponse à destination d'un autre radar appartenant également à la structure multi-radars considérée, les absences de réponse considérées n'étant dans ce cas pas comptabilisées comme telles et le taux de réponse moyen global est établi sur la base de la présence ou non de réponses à des interrogations émises par d'autre radars.

5. Procédé selon l'une quelconque des revendications précédentes, **caractérisé en ce que**, l'opération de mesure de sensibilité de la deuxième étape (12) est réalisée en diminuant progressivement la puissance transmise au transpondeur, des interrogations supplémentaires (73-74) étant émises par le radar dès que la puissance transmise au transpondeur passe en dessous d'une valeur de puissance donnée supérieure au seuil théorique de sensibilité (72) et dans un intervalle de puissance incluant ce seuil; les interrogations supplémentaires successives étant émises, alors que la puissance transmise au transpondeur diminue, jusqu'à ce qu'aucune réponse ne soit plus transmise au radar, la valeur de la moyenne, entre la puissance de signal transmise au transpondeur pour la dernière interrogation (74) à laquelle le transpondeur a répondu et celle pour laquelle le transpondeur n'a pas répondu, déterminant le niveau de sensibilité mesuré du transpondeur.

6. Procédé selon la revendication 5, **caractérisé en ce que**, la puissance d'émission de l'émetteur du radar étant réduite d'un nombre donné de dB, des interrogations supplémentaires (73-74) sont émises par le radar avec des niveaux de puissance dégressifs dès que, du fait du dépointage du lobe principal d'émission voie Somme par rapport à la direction de l'aéronef, la puissance transmise au transpondeur évolue dans un intervalle de puissance incluant le seuil théorique de sensibilité du transpondeur (72).

7. Procédé selon l'une des revendications 5 ou 6, **caractérisé en ce que** si dès la première interrogation supplémentaire le transpondeur ne fournit pas de réponse ou si, lors de la dernière interrogation supplémentaire, le transpondeur transmet toujours une réponse, l'étape de mesure de sensibilité est ré-exécutée au tour d'antenne suivant avec une puissance émise par l'émetteur respectivement supérieure ou inférieure à la puissance émise pour la mesure précédente.

8. Procédé selon l'une quelconque des revendications 1 à 4, **caractérisé en ce que**, l'émetteur étant configuré pour émettre un signal vers le transpondeur via les lobes d'émission voie Différence avec une puissance donnée, des interrogations supplémentaires (81-82) sont émises par le radar dès que, du fait du dépointage des lobes d'émission voie Différence par rapport à la direction de l'aéronef, la puissance transmise au transpondeur passe au-dessus d'une valeur de puissance donnée inférieure au seuil théorique de sensibilité (72) et croît dans un intervalle de puissance incluant ce seuil théorique (72), les interrogations supplémentaires successives étant émises, alors que la puissance transmise au transpondeur augmente, jusqu'à ce qu'une réponse soit transmise au radar, la valeur de la moyenne, entre la puissance de signal transmise au transpondeur pour la première interrogation (82) à laquelle le transpondeur a répondu et la dernière pour laquelle le transpondeur n'a pas répondu, est considérée comme correspondant au niveau de sensibilité mesuré du transpondeur.

9. Procédé selon la revendication 8, **caractérisé en ce que** si, alors que la valeur de la puissance transmise au transpondeur est supérieure à la limite supérieure de l'intervalle de puissance considéré le transpondeur ne transmet toujours aucune réponse, ou si le transpondeur fournit une réponse dès la première interrogation, l'étape de mesure de sensibilité est ré-exécutée au tour d'antenne suivant avec une puissance émise par l'émetteur respectivement supérieure ou inférieure à la puissance émise pour la mesure.

10. Procédé selon l'une quelconque des revendications précédentes, **caractérisé en ce que**, l'opération de mesure du taux de réponse maximal d'un transpondeur est réalisée en émettant vers le transpondeur considéré, dès que la dernière interrogation sélective opérationnelle (58) a été exécutée avec succès, des interrogations supplémentaires (91) successives, séparées entre elles par un intervalle de temps cohérent de l'unité de temps du taux de réponse maximal à mesurer, et en comptabilisant les réponses transmises par le transpondeur jusqu'à la première interrogation restée sans réponse, ainsi qu'en déterminant le temps de réponse maximal, de façon à établir une mesure du taux maximal pour une unité de temps donné, ledit taux étant comparé au taux minimal imposé par la réglementation applicable pour déterminer l'état du transpondeur.

11. Procédé selon l'une quelconque des revendications précédentes, **caractérisé en ce que** les différentes étapes (11, 12 et 13) sont exécutées plusieurs fois au cours du vol de l'aéronef, lors de chaque tour d'antenne, les résultats obtenus pour chaque mesure étant utilisés pour calculer une moyenne de la valeur de la caractéristique mesurée pondérée du nombre d'échantillons de chaque mesure et des conditions d'obtention de ladite mesure.

12. Procédé selon l'une quelconque des revendications précédentes, **caractérisé en ce que** les différentes étapes (11, 12 et 13) sont exécutées pour un même aéronef par plusieurs radars, les mesures obtenues par chacun des radars étant utilisées pour calculer une moyenne de la valeur de la caractéristique mesurée pondérée du nombre d'échantillons de chaque mesure et des conditions d'obtention de ladite mesure.

## Patentansprüche

1. Verfahren zum Durchführen des Tests des korrekten Betriebs des Sekundärradar-Transponders eines Luftfahrzeugs, das in einer von einem sekundären Luftverkehrsüberwachungsradar abgedeckten Zone fliegt, **dadurch gekennzeichnet, dass** es Folgendes aufweist:

- einen ersten Schritt (11), der Folgendes implementiert:
- einen Vorgang (111) des Messens der von dem Transponder gesendeten Leistung auf der Basis des Messwerts der empfangenen Leistung des Transponders als Reaktion auf jede vom Radar gesendete Abfrage;
- einen Vorgang (112) des Messens der mittleren lokalen Antwortrate des Transponders auf die vom Radar gesendeten Abfragen, durchgeführt durch Zählen der Abfragen, für die das Radar eine Antwort vom Transponder erhalten hat;
wobei der erste Schritt ausgeführt wird, während die Betriebsparameter des Radars in Bezug auf die Betriebsparameter nicht geändert werden;
- einen zweiten Schritt (12), in dem ein Vorgang des Messens der Empfindlichkeit des Transponders implementiert wird, durchgeführt durch Senden zusätzlicher Abfragen mit im Laufe der Zeit zunehmenden oder abnehmenden Sendeleistungspegeln und durch Bestimmen des beim Senden der ersten Abfrage gesendeten Sendeleistungspegels, unterhalb dessen der Transponder keine Antwort sendet;
wobei der zweite Schritt durch Ändern der Betriebsparameter des Radars erfolgt, so dass die für die Messung erforderlichen zusätzlichen Abfragen während des Zeitintervalls nach der letzten Betriebsabfrage, in dem sich das Luftfahrzeug in der Summenkanal-Hauptkeule der Radarantenne befindet, mit einer in Richtung des Transponders gesendeten Leistung innerhalb der Transponderempfindlichkeitsschwelle durchgeführt werden können;
- einen dritten Schritt (13), in dem ein Vorgang des Messens der maximalen Antwortrate implementiert wird, die der Transponder über ein kurzes Zeitintervall von gegebener Dauer aufrechterhalten kann, wobei der Vorgang durch Senden mehrerer zusätzlicher Abfragen und durch Zählen der Abfragen durchgeführt wird, für die der Transponder Antworten gesendet hat;
wobei der dritte Schritt durch Ändern der Betriebsparameter des Radars durchgeführt wird, um während des Zeitintervalls nach der letzten Betriebsabfrage, in dem sich das Luftfahrzeug in der Summenkanal-Hauptkeule der Radarantenne befindet, das Senden einer Anzahl von aufeinander folgenden Abfragen zu ermöglichen, die ausreicht, damit keine Antwort von dem Transponder erhalten wird.

**2.** Verfahren nach Anspruch 1, **dadurch gekennzeichnet, dass** der Vorgang der Leistungsmessung (111) des ersten Schritts (11) auf der Basis von zum Transponder gesendeten Betriebsabfragen oder zusätzlichen Abfragen durchgeführt wird.

**3.** Verfahren nach einem der Ansprüche 1 oder 2, **dadurch gekennzeichnet, dass** der Vorgang des Messens der lokalen mittleren Antwortrate des Transponders (112) des ersten Schritts (11) durch Einrechnen, für jede Antennenumdrehung, des Verhältnisses zwischen der Anzahl der zum Transponder gesendeten Abfragen und der Anzahl der in der EBW-Keule erhaltenen Antworten und durch gleitendes Berechnen des Mittelwertes dieses Verhältnisses über eine gegebene Anzahl von Antennenumdrehungen oder Antennen-Rendezvous durchgeführt wird.

**4.** Verfahren nach Anspruch 3, **dadurch gekennzeichnet, dass** in einer Multi-Radar-Betriebskonfiguration die Ausführung des Vorgangs des Messens der lokalen mittleren Antwortrate des Transponders (112) des ersten Schritts (11) einen ergänzenden Vorgang (113) beinhaltet, der es zulässt festzustellen, ob im Falle des Ausbleibens einer Antwort auf die vom Radar gesendeten Abfragen während eines bestimmten Zeitintervalls das abgefragte Luftfahrzeug durch die Übertragung einer Antwort an ein ebenfalls zur betrachteten Multi-Radar-Struktur gehörendes anderes Radar besetzt ist, wobei die betrachteten Antwortausfälle in diesem Fall nicht als solche gezählt werden und die globale mittlere Antwortrate auf der Basis des Vorliegens oder Ausbleibens von Antworten auf von anderen Radars gesendete Abfragen etabliert wird.

**5.** Verfahren nach einem der vorhergehenden Ansprüche, **dadurch gekennzeichnet, dass** der Vorgang des Messens der Empfindlichkeit des zweiten Schritts (12) durch schrittweises Verringern der zum Transponder übertragenen Leistung durchgeführt wird, wobei zusätzliche Abfragen (73-74) vom Radar ausgegeben werden, sobald die zum Transponder übertragene Leistung unter einen gegebenen Leistungswert fällt, der größer ist als der theoretische Empfindlichkeitsschwellenwert (72) und innerhalb eines diesen Schwellenwert einschließenden Leistungsbereichs liegt; wobei die aufeinanderfolgenden zusätzlichen Abfragen gesendet werden, während die zum Transponder übertragene Leistung abnimmt, bis keine weitere Antwort zum Radar übertragen wird, wobei der Mittelwert zwischen der zum Transponder übertragenen Signalleistung für die letzte Abfrage (74), auf die der Transponder geantwortet hat, und derjenigen, auf die der Transponder nicht geantwortet hat, den gemessenen Empfindlichkeitsgrad des Transponders bestimmt.

**6.** Verfahren nach Anspruch 5, **dadurch gekennzeichnet, dass** bei einer um eine bestimmte Anzahl von dB reduzierten Sendeleistung des Radarsenders zusätzliche Abfragen (73-74) mit abnehmenden Leistungspegeln vom Radar gesendet werden, sobald sich die zum Transponder übertragene Leistung aufgrund der Fehlausrichtung der Summenkanal-Sendehauptkeule in Bezug auf die Richtung des Luftfahrzeugs in einem die theoretische Empfindlichkeitsschwelle des Transponders (72) einschließenden Leistungsbereich entwickelt.

**7.** Verfahren nach einem der Ansprüche 5 oder 6, **dadurch gekennzeichnet, dass**, wenn der Transponder nach der ersten zusätzlichen Abfrage keine Antwort liefert oder wenn der Transponder nach der letzten zusätzlichen Abfrage immer noch eine Antwort überträgt, der Empfindlichkeitsmessschritt bei der nächsten Antennenumdrehung mit einer vom Sender gesendeten Leistung erneut ausgeführt wird, die höher oder niedriger ist als die für die vorherige Messung gesendete Leistung.

**8.** Verfahren nach einem der Ansprüche 1 bis 4, **dadurch gekennzeichnet, dass** bei dem zum Senden eines Signals über die Differenzkanal-Sendekeulen mit einer gegebenen Leistung zum Transponder konfigurierten Sender zusätzliche Abfragen (81-82) vom Radar gesendet werden, sobald die zum Transponder übertragene Leistung des Transponders aufgrund der Fehlausrichtung der Differenzkanal-Sendekeulen in Bezug auf die Richtung des Luftfahrzeugs einen gegebenen Leistungswert unterhalb der theoretischen Empfindlichkeitsschwelle (72) übersteigt und in einem Leistungsbereich innerhalb dieser theoretischen Schwelle (72) zunimmt, wobei die aufeinanderfolgenden zusätzlichen Abfragen mit zunehmender Leistung zum Transponder übertragen werden, bis eine Antwort zum Radar übertragen wird, wobei der Mittelwert zwischen der zum Transponder übertragenen Signalleistung für die erste Abfrage (82), auf die der Transponder geantwortet hat, und der letzten Abfrage, auf die der Transponder nicht geantwortet hat, als dem gemessenen Empfindlichkeitsgrad des Transponders entsprechend angesehen wird.

**9.** Verfahren nach Anspruch 8, **dadurch gekennzeichnet, dass**, während der Wert der zum Transponder übertragenen Leistung höher ist als die Obergrenze des betrachteten Leistungsbereichs, der Transponder immer noch keine Antwort sendet, oder wenn der Transponder eine Antwort auf die erste Abfrage liefert, der Empfindlichkeitsmessschritt bei der nächsten Antennenumdrehung mit einer vom Sender gesendeten Leistung, die jeweils höher oder niedriger ist als die für die Messung gesendete Leistung, erneut ausgeführt wird.

**10.** Verfahren nach einem der vorhergehenden Ansprüche, **dadurch gekennzeichnet, dass** der Vorgang des Messens der maximalen Antwortrate eines Transponders durch Senden, nach erfolgreicher Durchführung der letzten selektiven Betriebsabfrage (58), von aufeinanderfolgenden zusätzlichen Abfragen (91), durch ein kohärentes Zeitintervall der Zeiteinheit der zu messenden maximalen Antwortrate voneinander getrennt, zu dem betreffenden Transponder und durch Zählen der vom Transponder gesendeten Antworten, bis die erste Abfrage unbeantwortet bleibt, sowie durch Bestimmen der maximalen Antwortzeit zum Erzielen einer Messung der maximalen Rate für eine gegebene Zeiteinheit durchgeführt wird, wobei die Rate mit der Mindestrate verglichen wird, die durch die zum Bestimmen des Zustands des Transponders geltenden Vorschrift vorgeschrieben wird.

**11.** Verfahren nach einem der vorhergehenden Ansprüche, **dadurch gekennzeichnet, dass** die verschiedenen Schritte (11, 12 und 13) mehrmals im Laufe des Flugs des Luftfahrzeugs bei jeder Antennenumdrehung durchgeführt werden, wobei die für jede Messung erhaltenen Ergebnisse verwendet werden, um einen Mittelwert des Wertes der gewichteten gemessenen Eigenschaft der Anzahl der Proben jeder Messung und der Bedingungen für den Erhalt der Messung zu berechnen.

**12.** Verfahren nach einem der vorhergehenden Ansprüche, **dadurch gekennzeichnet, dass** die verschiedenen Schritte (11, 12 und 13) für ein selbes Luftfahrzeug von mehreren Radaren durchgeführt werden, wobei die von jedem der Radargeräte erhaltenen Messungen verwendet werden, um einen Mittelwert des Wertes der gewichteten gemessenen Eigenschaft der Anzahl der Proben jeder Messung und der Bedingungen für den Erhalt dieser Messung zu berechnen.

## Claims

**1.** Method for performing the testing of the correct operation of the secondary radar transponder of an aircraft moving in an area covered by a secondary air traffic surveillance radar, **characterized in that** it has:

- a first step (11) which implements:
- an operation (111) of measurement of the power transmitted by the transponder, from the measurement of the power received from the transponder in reply to each interrogation transmitted by the radar;
- an operation (112) of measurement of the local average rate of reply of the transponder to the interrogations transmitted by the radar, performed by counting the number of interrogations for which the radar has received a reply originating from the transponder;

the first step being performed while the operating parameters of the radar are not modified relative to the operation parameters;

- a second step (12) which implements an operation of measurement of the sensitivity of the transponder, performed by transmitting additional interrogations with transmission power levels increasing or decreasing over time, and by determining the transmitted power level in the transmission of the first interrogation below which the transponder does not transmit a reply;

the second step being performed by modifying the operating parameters of the radar so that the additional interrogations required for the measurement can be performed, during the time interval following the last operational interrogation during which the aircraft remains located in the main Sum channel lobe of the antenna of the radar, with a transmitted power in the direction of the transponder framing the sensitivity threshold of the transponder;

- a third step (13) which implements an operation of measurement of the maximum rate of reply that the transponder can sustain during a short time interval of given duration, the operation being performed by transmitting a plurality of additional interrogations and by counting the interrogations for which the transponder has transmitted replies;

the third step being performed by modifying the operating parameters of the radar so as to make it possible to transmit, during the time interval following the last operational interrogation during which the aircraft remains located within the main Sum channel lobe of the antenna of the radar, a number of successive interrogations that is sufficient to cause an absence of reply from the transponder.

2. Method according to claim 1, **characterized in that** the power measurement operation (111) of the first step (11) is performed from the operational interrogations or additional interrogations transmitted to the transponder.

3. Method according to one of claims 1 or 2, **characterized in that** the operation of measurement of the local average rate of reply of the transponder (112) of the first step (11) is carried out by performing, for each antenna revolution, the accounting of the ratio between the number of interrogations sent to the transponder and the number of replies obtained in the effective EBW lobe, and by calculating, in a sliding manner, the average value of this ratio over a given number of antenna revolutions or antenna rendezvous.

4. Method according to claim 3, **characterized in that**, in a multi-radar operating configuration, the execution of the operation of measurement of the local average rate of reply of the transponder (112) of the first step (11) involves a complementary operation (113) that makes it possible to determine whether, in the case of an absence of reply to the interrogations transmitted by the radar during a given time interval, the interrogated aircraft is busy with the transmission of a reply to another radar also belonging to the multi-radar considered, the absences of reply considered not being counted as such in this case and the overall average rate of reply is established on the basis of the presence or not of reply to interrogations transmitted by other radars.

5. Method according to any one of the preceding claims, **characterized in that** the sensitivity measurement operation of the second step (12) is performed by progressively reducing the power transmitted to the transponder, additional interrogations (73-74) being transmitted by the radar as soon as the power transmitted to the transponder passes below a given power value greater than the theoretical sensitivity threshold (72) and within a power interval including this threshold; the successive additional interrogations being transmitted, while the power transmitted to the transponder decreases until no further reply is transmitted to the radar, the value of the average, between the power of the signal transmitted to the transponder for the last interrogation (74) to which the transponder has replied and that for which the transponder has not replied, determining the measured sensitivity level of the transponder.

6. Method according to claim 5, **characterized in that**, the transmission power of the transmitter of the radar being reduced by a given number of dB, additional interrogations (73-74) are transmitted by the radar with decreasing power levels as soon as, because of the misalignment of the main Sum channel transmission lobe relative to the direction of the aircraft, the power transmitted to the transponder evolves within a power interval including the theoretical sensitivity threshold of the transponder (72).

7. Method according to one of claims 5 or 6, **characterized in that** if, from the first additional interrogation, the transponder does not supply a reply or if, upon the last additional interrogation, the transponder still transmits a reply, the sensitivity measurement step is re-executed on the next antenna revolution with a power transmitted by the transmitter respectively greater than or less than the power transmitted for the preceding measurement.

8. Method according to any one of claims 1 to 4, **characterized in that**, the transmitter being configured to transmit a signal to the transponder via the Difference channel transmission lobes with a given power, additional interrogations (81-82) are transmitted by the radar as soon as, because of the misalignment of the Difference channel transmission lobes relative to the direction of the aircraft, the power transmitted to the transponder passes above a given power value lower than the theoretical sensitivity threshold (72) and increases within a power interval including this theoretical threshold (72), the successive additional interrogations being transmitted, while the power transmitted to the transponder increases, until a reply is transmitted to the radar, the value of the average, between the power of the signal transmitted to the transponder for the first interrogation (82) to which the transponder has replied and the last for which the transponder has not replied, is considered to correspond to the measure sensitivity level of the transponder.

9. Method according to claim 8, **characterized in that** if, while the value of the power transmitted to the transponder is greater than the upper limit of the power interval considered the transponder still does not transmit any reply, or if the transponder supplies a reply from the first interrogation, the sensitivity measurement step is re-executed on the next antenna revolution with a power transmitted by the transmitter respectively greater than or less than the power transmitted for the measurement.

10. Method according to any one of the preceding claims, **characterized in that**, the operation of measurement of maximum rate of reply of a transponder is performed by transmitting, to the transponder concerned, as soon as the operational selective interrogation (58) has been successfully executed, successive additional interrogations (91), separated from one another by a time interval consistent with the time unit of the maximum rate of reply to be measured, and by counting the replies transmitted by the transponder up to the first interrogation remaining without reply, and by determining the maximum reply time, so as to establish a measurement of the maximum rate for a given time unit, said rate being compared to the minimum rate imposed by the applicable regulation to determine the state of the transponder.

11. Method according to any one of the preceding claims, **characterized in that** the different steps (11, 12 and 13) are executed several times during the flight of the aircraft, on each antenna revolution, the results obtained for each measurement being used to calculate an average of the value of the weighted measured characteristic of the number of samples of each measurement and of the conditions of obtaining said measurement.

12. Method according to any one of the preceding claims, **characterized in that** the different steps (11, 12 and 13) are executed for one and the same aircraft by several radars, the measurements obtained by each of the radars being used to calculate an average of the value of the weighted measured characteristic of the number of samples of each measurement and of the conditions of obtaining said measurement.

11
111
Radar en mode Opérationnel
Mesure Puissance du Transpondeur
Mesure Taux de Réponse Moyen local du Transpondeur
113
112
Mesure Taux de Réponse Moyen global du Transpondeur
Avec Interrogations Sélectives Supplémentaires et nouveau Réglage Dynamique du Radar
Mesure Taux de Réponse Maximal du Transpondeur
13
Mesure Sensibilité du Transpondeur
12

FIG.1

21
ELEMENTS RAYONNANTS
Diagramme Σ
Diagramme Δ
Diagramme CONT
2101
2102
2103
Codeur Azimut
SUM
DIFF
CONT
22
23
24
25
Voie Σ
Voie CONT
Voie Σ
Voie Δ
Voie CONT
26
27
Interro-gations IFF
Interro-gations SSR
Interro-gations Mode S
Temps Réel Radar
Gestion Spatio-temporelle
Traitement synchrone réponses IFF
Traitement synchrone réponses SSR
Traitement synchrone réponses Mode S
Interrogation
Réponse
Réponse
28
29
Modes S & SSR & IFF
Gestion Faisceau Radar
Extracteur Mode S
Extracteur SSR
Extracteur IFF
Plots
Plots
Modes S & SSR & IFF
Gestion de tâches de tour à tour
Mode S & SSR & IFF
Association & Pistage
Pistes
211
2111
2112
Requêtes Tâches radar
PLOTS & PISTES

FIG.2

Gain relatif (dB)
0
-5
-10
-15
-20
-25
-30
-35
-40
-45
-50
Excursion en azimut (degrés)
-10
-9
-8
-7
-6
-5
-4
-3
-2
-1
0
1
2
3
4
5
6
7
8
9
10
31
32
33
34
35
36

FIG.3

30
25
20
15
10
5
0
-5
Gain d'antenne voie Σ (dB)
41
42
-40 -35 -30 -25 -20 -15 -10 -5 0 +5 +10 +15 +20 +25 +30 +35 +40 +45 +50 +55 +60
Excursion en élévation (degrés)

FIG.4

Interrogations
Réponses
Non réponses
Zone d'exclusion ISLS – RSLS arrière
Zone d'exclusion ISLS – RSLS avant
Sens rotation antenne
Traitement opérationnel
Puissance rayonnée (dB)
Ecart antenne-transpondeur en azimut (degrés)
0
-5
-10
-15
-20
-25
-30
-35
-40
-45
-50
-5.0
-4.5
-4.0
-3.5
-3.0
-2.5
-2.0
-1.5
-1.0
0.5
0.0
0.5
1.0
1.5
2.0
2.5
3.0
3.5
4.0
4.5
5.0
31
32
33
35
51
52
53
54
55
56
57
57
58

FIG.5

Interrogations
Réponses
Non réponses
Zone d'exclusion ISLS – RSLS avant
Zone d'exclusion ISLS – RSLS arrière
Traitement opérationnel et Test bon fonctionnement
Sens rotation antenne
Puissance rayonnée (dB)
Ecart antenne-transpondeur en azimut (degrés)
31
32
33
35
51
52
53
54
55
56
57
58
61

FIG.6

Interrogations
Réponses
Non réponses
Zone d'exclusion ISLS – RSLS arrière
Zone d'exclusion ISLS – RSLS avant
Puissance rayonnée (dB)
0
-5
-10
-15
-20
-25
-30
-35
-40
-45
-50
-5.0
-4.5
-4.0
-3.5
-3.0
-2.5
-2.0
-1.5
-1.0
0.5
0.0
0.5
1.0
1.5
2.0
2.5
3.0
3.5
4.0
4.5
5.0
Test bon fonctionnement
Traitement opérationnel
Sens rotation antenne
Ecart antenne-transpondeur en azimut (degrés)
31
32
33
35
31-32
51
53
54
55
57
58
71
72
73
74
75

FIG.7

Interrogations
Réponses
Non réponses
Zone d'exclusion ISLS – RSLS arrière
Zone d'exclusion ISLS – RSLS avant
Sens rotation antenne
Test bon fonctionnement
Traitement opérationnel
Ecart antenne-transpondeur en azimut (degrés)
Puissance rayonnée (dB)
31
32
33
35
36
35-36
51
53
54
55
57
58
71
72
81
82
83
-5.0
-4.5
-4.0
-3.5
-3.0
-2.5
-2.0
-1.5
-1.0
-0.5
0.0
0.5
1.0
1.5
2.0
2.5
3.0
3.5
4.0
4.5
5.0
0
-5
-10
-15
-20
-25
-30
-35
-40
-45
-50


FIG.8

Interrogations
Réponses
Non réponses
Zone d'exclusion ISLS – RSLS arrière
Zone d'exclusion ISLS – RSLS avant
Sens rotation antenne
Puissance rayonnée (dB)
Ecart antenne-transpondeur en azimut (degrés)
0
-5
-10
-15
-20
-25
-30
-35
-40
-45
-50
-5.0
-4.5
-4.0
-3.5
-3.0
-2.5
-2.0
-1.5
-1.0
-0.5
0.0
0.5
1.0
1.5
2.0
2.5
3.0
3.5
4.0
4.5
5.0
31
32
33
35
51
53
54
55
57
58
71
91

FIG.9

Σ
Δ
CONT
23
24
1009
25
Voie Σ
Voie Δ
Voie CONT
Voie Σ
Voie Δ
Voie CONT
1006
1008
27
Interrogations
Mode S
Traitement synchrone réponses Mode S
26
1005
Interrogations opérationnelles
Interrogations supplémentaires
Réponses opérationnelles
+ Réponses supplémentaires(*)
Azimut
Temps Réel Radar
Gestion Spatio-temporelle
1004
Extracteur Mode S
29
Modes S & SSR & IFF
Gestion Faisceau Radar
28
1007
Plots
Réponses supplémentaires(*)
1003
Tâches opérationnelles
Tâches supplémentaires
Mode S & SSR & IFF
Association & Pistage
Modes S & SSR & IFF
Gestion de tâches de tour à tour
1007
Réponses supplémentaires(*)
2112
Plots et Pistes
Mesure des caractéristiques du transpondeur en mode S
2111
Requêtes transactions supplémentaires
211
1002
1001
Requêtes Tâches radar
PLOTS & PISTES
Caractéristiques transpondeur en mode S
(*) Réponses et non réponses aux interrogations supplémentaires

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2431762 A1